(19) Europäisches Patentamt
European Patent Office
Office européen des brevets

(11) **EP 4 651 541 A1**

(12) **EUROPEAN PATENT APPLICATION**
published in accordance with Art. 153(4) EPC

(43) Date of publication:
**19.11.2025 Bulletin 2025/47**

(21) Application number: **23915404.0**

(22) Date of filing: **13.01.2023**

(51) International Patent Classification (IPC):
**H04W 24/02** (2009.01)

(52) Cooperative Patent Classification (CPC):
**H04W 24/02**

(86) International application number:
**PCT/CN2023/072212**

(87) International publication number:
**WO 2024/148635 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **LI, Mingju**
**Beijing 100085 (CN)**

(74) Representative: **Dehns Germany Partnerschaft mbB**
**Theresienstraße 6-8**
**80333 München (DE)**

(54) **INFORMATION SENDING METHOD AND APPARATUS, INFORMATION RECEIVING METHOD AND APPARATUS, AND COMMUNICATION APPARATUS AND STORAGE MEDIUM**

(57) The present disclosure relates to the technical field of communications, and in particular to an information sending method and apparatus, an information receiving method and apparatus, and a communication apparatus and a storage medium. The information sending method comprises: according to first configuration information sent by a network device, determining at least one IMR corresponding to a terminal when the terminal selects at least one CSI-RS resource from among a plurality of CSI-RS resources; performing measurement on the basis of the at least one CSI-RS resource and/or the at least one IMR, so as to obtain at least one measurement result; and sending indication information to the network device, wherein the indication information is used for indicating the at least one CSI-RS resource and/or the at least one IMR which correspond(s) to the at least one measurement result. In the present disclosure, an IMR determined by a terminal may correspond to a first CSI-RS resource set, one first CSI-RS resource set corresponds to one CSI-RS resource selection mode, and when the terminal has a plurality of selection modes for CSI-RS resources, a plurality of IMRs may be determined instead of being limited to determining only one IMR.

Fig. 1

EP 4 651 541 A1

**Description**

**TECHNICAL FIELD**

The disclosure relates to the field of communication technology, and in particular to an information sending method, an information receiving method, an information sending apparatus, an information receiving apparatus, an information sending system, a communication device and a computer readable storage medium.

**BACKGROUND**

When a network device uses multiple Transmission and Receiving Points (TRPs) to provide services to a terminal, measurement configurations for Channel State Information Reference Signal (CSI-RS) can be configured for the terminal respectively for each TRP.

The measurement configuration includes but is not limited to Channel Measurement Resource (CMR) and Interference Measurement Resource (IMR). The terminal can perform measurements according to the measurement configurations and report the measurement results. However, in scenarios where the network device uses multiple TRPs to provide services to the terminal, there are still some issues that need to be addressed for the terminal to measure based on the measurement configurations.

**SUMMARY**

Embodiments of the present disclosure propose an information sending method, an information receiving method, an information sending apparatus, an information receiving apparatus, an information sending system, a communication device and a computer readable storage medium, to solve the technical problems in the related art.

According to a first aspect of embodiments of the present disclosure, an information sending method is provided. The information sending method is performed by a terminal and includes: determining at least one interference measurement resource (IMR) according to first configuration information sent by a network device, wherein the at least one IMR corresponds to a first channel state information reference signal (CSI-RS) resource set, and the first CSI-RS resource set includes at least one CSI-RS resource selected by the terminal from a plurality of CSI-RS resources; obtaining at least one measurement result by performing measurement based on the at least one CSI-RS resource and/or the at least one IMR; and sending indication information to the network device, wherein the indication information indicates the at least one CSI-RS resource and/or the at least one IMR corresponding to the at least one measurement result.

According to a second aspect of embodiments of the present disclosure, an information receiving method is provided. The information receiving method is performed by a network device and includes: sending first configuration information to a terminal, wherein the first configuration information is used to configure at least one interference measurement resource (IMR) for the terminal, the at least one IMR corresponds to a first channel state information reference signal (CSI-RS) resource set, and the first CSI-RS resource set includes at least one CSI-RS resource selected by the terminal from a plurality of CSI-RS resources; receiving indication information sent by the terminal, wherein the indication information indicates at least one CSI-RS resource and/or at least one IMR corresponding to at least one measurement result obtained by the terminal performing measurement based on the at least one CSI-RS resource and/or the at least one IMR.

According to a third aspect of embodiments of the present disclosure, an information sending apparatus is provided. The information sending apparatus includes: a processing module, configured to determine at least one interference measurement resource (IMR) according to first configuration information sent by a network device, wherein the at least one IMR corresponds to a first channel state information reference signal (CSI-RS) resource set, and the first CSI-RS resource set includes at least one CSI-RS resource selected by the terminal from a plurality of CSI-RS resources; and obtain at least one measurement result by performing measurement based on the at least one CSI-RS resource and/or the at least one IMR; and a sending module, configured to send indication information to the network device, wherein the indication information indicates the at least one CSI-RS resource and/or the at least one IMR corresponding to the at least one measurement result.

According to a fourth aspect of embodiments of the present disclosure, an information receiving apparatus is provided. The information receiving apparatus includes: a sending module, configured to send first configuration information to a terminal, wherein the first configuration information is used to configure at least one interference measurement resource (IMR) for the terminal, the at least one IMR corresponds to a first channel state information reference signal (CSI-RS) resource set, and the first CSI-RS resource set includes at least one CSI-RS resource selected by the terminal from a plurality of CSI-RS resources; and a receiving module, configured to receive indication information sent by the terminal, wherein the indication information indicates at least one CSI-RS resource and/or at least one IMR corresponding to at least one measurement result obtained by the terminal performing measurement based on the at least one CSI-RS resource and/or the at least one IMR.

According to a fifth aspect of embodiments of the present disclosure, an information sending system is provided, including a terminal and network device, wherein the information sending terminal is configured to implement the information sending method described above, and the information sending network device is configured to implement the information receiving method described above.

According to a sixth aspect of embodiments of the present disclosure, a communication device is provided, including: a processor; and a memory for storing a computer program, wherein when the computer program is executed by a processor, the information sending method described above is implemented.

According to a seventh aspect of embodiments of the present disclosure, a communication device is provided, including: a processor; and a memory for storing a computer program, wherein when the computer program is executed by a processor, the information receiving method described above is implemented.

According to an eighth aspect of embodiments of the present disclosure, a computer readable storage medium is provided, configured to store a computer program. When the computer program is executed by a processor, the information sending method described above is implemented.

According to a ninth aspect of embodiments of the present disclosure, a computer readable storage medium is provided, configured to store a computer program. When the computer program is executed by a processor, the information receiving method described above is implemented.

According to embodiments of the present disclosure, the terminal can determine at least one IMR based on the first configuration information, wherein at least one IMR corresponds to the first CSI-RS resource set, which includes at least one CSI-RS resource selected by the terminal from multiple CSI-RS resources. Based on this, the IMR determined by the terminal can correspond to the first CSI-RS resource set, and one first CSI-RS resource set corresponds to one selection mode for CSI-RS resources. When the terminal has multiple selection modes for CSI-RS resources, multiple IMRs can be determined, rather than being limited to only one IMR.

The terminal can subsequently perform measurement based on the at least one CSI-RS resource and/or the at least one IMR to obtain at least one measurement result. Since the IMR corresponds to the at least one CSI-RS resource selected by the terminal, the measured result also corresponds to the at least one CSI-RS resource selected by the terminal, which is conducive to ensuring that the measurement results can accurately characterize the measurement results corresponding to at least one IMR when the terminal selects different CSI-RS resources.

Furthermore, the terminal sends indication information to the network device, indicating the at least one CSI-RS resource and/or the at least one IMR corresponding to the at least one measurement result, so that the network device can determine the at least one CSI-RS resource and/or the at least one IMR corresponding to the at least one measurement result, and the measurement results can accurately characterize the measurement results corresponding to at least one IMR when the terminal selects different CSI-RS resources.

## BRIEF DESCRIPTION OF THE DRAWINGS

In order to provide a clearer explanation of the technical solution in embodiments of the present disclosure, a brief introduction will be given to the accompanying drawings required for the description of the embodiments. It is obvious that the accompanying drawings described below are only some embodiments of this disclosure. For those skilled in the art, other drawings can be obtained based on these drawings without creative labor.

Fig. 1 is a schematic flowchart of an information sending method illustrated according to an embodiment of the present disclosure.

Fig. 2 is a schematic flowchart of another information sending method illustrated according to an embodiment of the present disclosure.

Fig. 3 is a schematic flowchart of an information receiving method illustrated according to an embodiment of the present disclosure.

Fig. 4 is a schematic flowchart of another information receiving method illustrated according to an embodiment of the present disclosure.

Fig. 5 is a schematic diagram of interaction between a terminal and a network device illustrated according to an embodiment of the present disclosure.

Fig. 6 is a block diagram of an information sending apparatus illustrated according to an embodiment of the present disclosure.

Fig. 7 is a block diagram of an information receiving apparatus illustrated according to an embodiment of the present disclosure.

Fig. 8 is a block diagram of a device for information receiving illustrated according to an embodiment of the present disclosure.

Fig. 9 is a block diagram of a device for information sending illustrated according to an embodiment of the present disclosure.

## DETAILED DESCRIPTION

In the following, a clear and complete description of the technical solution in embodiments of the present disclosure will be provided in conjunction with the accompanying drawings. Obviously, the described embodiments are only a part of embodiments of the present disclosure, not all of them. Based on the embodiments disclosed in this disclosure, all other embodiments obtained by ordinary skilled persons in this field without creative labor are within the scope of protection of this disclosure.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although the terms first, second, third, etc. may be used to describe various information in embodiments of the present disclosure, these terms should not be limited to them. These terms are only used to distinguish information of the same type from each other. For example, without departing from the scope of embodiments of the present disclosure, the first information may also be referred to as the second information, and similarly, the second information may also be referred to as the first information. Depending on the context, the word 'if' used here can be interpreted as 'when' or 'in a case' or 'in response to determining'.

For the purpose of simplicity and ease of understanding, the terms used in this article to characterize size relationships are "greater than" or "less than", "higher than" or "lower than". But for technical personnel in this field, it can be understood that the term "greater than" also encompasses the meaning of "greater than or equal to", and "less than" also encompasses the meaning of "less than or equal to"; the term 'higher than' encompasses the meaning of 'higher than or equal to', and 'lower than' also encompasses the meaning of 'lower than or equal to'.

The scenarios used in embodiments of the present disclosure include but are not limited to scenarios where a network device uses multiple TRPs to provide services to a terminal, and scenarios where the network device uses multiple RRHs (Remote Radio Heads) to provide services to the terminal. The following is mainly an example of a scenario where the network device uses multiple TRPs to provide services to the terminal.

In an embodiment, the network device can use multiple TRPs to provide services to the terminal, where a number of the TRPs may be set as needed, for example, multiple TRPs include but are not limited to 4 TRPs, 3 TRPs, and 2 TRPs. The scenario where the network device uses multiple TRPs to provide services to the terminal can also be referred to as Coherent Joint Transmission (CJT) scenario.

In the scenario where the network devices uses multiple TRPs to provide services to the terminal, the network device can configure measurement configurations for CSI-RS for each TRP separately for the terminal. The measurement configuration includes but is not limited to channel measurement resource (CMR) and interference measurement resource (IMR). The terminal can perform measurement according to the measurement configurations and send the measurement results to the network device.

Take the network device providing services to the terminal through four TRPs as an example.

The CMR configured by the network device for the terminal may include N CSI-RS resources, where N is any value from 1, 2, 3, or 4, and the CSI-RS resources correspond one-to-one with the TRPs. The terminal can perform measurement on the N CSI-RS resources, to obtain N measurement results, and then select at least one CSI-RS resource from the N measurement results, and inform the network device of the selected at least one CSI-RS resource. That is, the terminal sends indication information of the at least one CSI-RS resource to the network device.

The network device can determine the CSI-RS resource selected by the terminal based on the received indication information of at least one CSI-RS resource, and then determine the TRP corresponding to the CSI-RS resource selected by the terminal based on the correspondence between the CSI-RS resources and TRPs, and provide services to the terminal using the determined TRP. In other words, the TRP corresponding to the CSI-RS resources selected by the terminal is the TRP that the terminal expects the network device to use.

In the scenario where the network device uses multiple TRPs to provide services to the terminal, there is currently no suitable solution for measurement of IMR. In an embodiment, the network device can configure one IMR for the terminal, so that the terminal performs measurement on the IMR and report the measurement result. However, the measurement result corresponding to the IMR obtained in this way has certain problems, since when the terminal selects different CSI-RS resources, the measurement result corresponding to IMR obtained by the terminal can only be measured on one IMR, which is difficult to accurately characterize the measurement result corresponding to IMR when the terminal selects different CSI-RS resources.

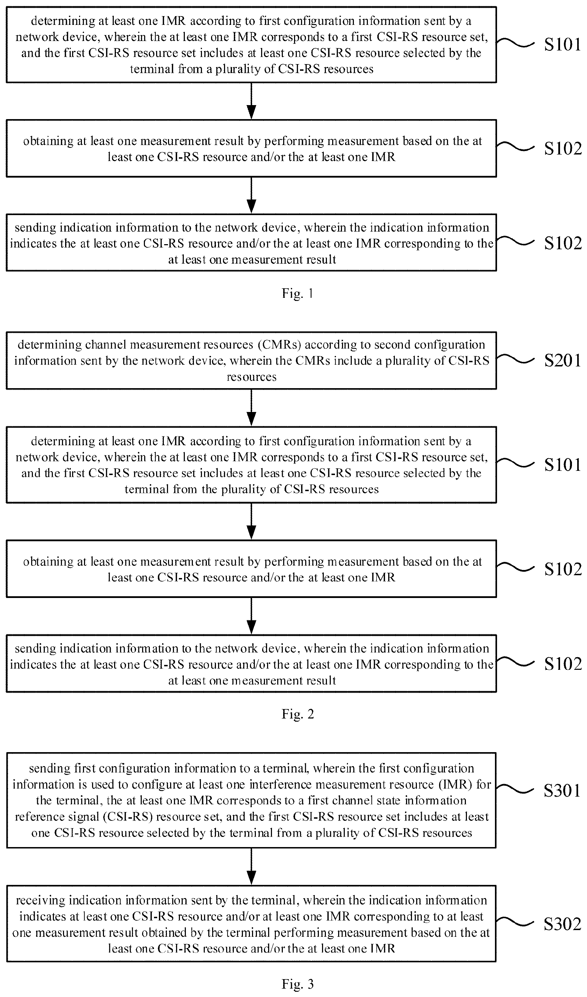

Fig. 1 is a schematic flowchart of an information sending method illustrated according to an embodiment of the present disclosure. The information sending method illustrated in this embodiment can be performed by a terminal. The terminal includes but is not limited to a phone, a tablet, a wearable device, a sensor, and an IoT device. The terminal can communication with a network device. The network device includes but is not limited to a network device in a communication systems such as 4G, 5G and 6G, such as a base station, a core network, etc.

As shown in Fig. 1, the information sending method may include the following steps.

In step S101, at least one interference measurement resource (IMR) is determined according to first configuration information sent by a network device, wherein the at least one IMR corresponds to a first channel state information reference signal (CSI-RS) resource set, and the first CSI-RS resource set comprises at least one CSI-RS resource selected by the terminal from a plurality of CSI-RS resources.

In step S102, at least one measurement result is obtained by performing measurement based on the at least one CSI-RS resource and/or the at least one IMR.

In step S103, indication information is sent to the network device, wherein the indication information indicates the at least one CSI-RS resource and/or the at least one IMR corresponding to the at least one measurement result.

It should be noted that the terminal can select to execute step S102 and/or step S103, or select to not execute step S102 and step S103, after executing step S101.

In an embodiment, the network device can send the first configuration information to the terminal. The first configuration information is used to configure at least one IMR for the terminal. The at least one IMR corresponds to the first CSI-RS resource set, and the first CSI-RS resource set includes at least one CSI-RS resource selected by the terminal from a plurality of CSI-RS resources.

The terminal receives the first configuration information sent by the network device, and can determine at least one IMR according to the first configuration information. The at least one IMR corresponds to the first CSI-RS resource set, and the first CSI-RS resource set includes at least one CSI-RS resource selected by the terminal from a plurality of CSI-RS resources. The IMR can be used to measure interference when the terminal selects at least one CSI-RS resource from the plurality of CSI-RS resources.

In an embodiment, the at least one CSI-RS resource selected by the terminal from the plurality of CSI-RS resources can correspond to one IMR. In another embodiment, the at least one CSI-RS resource selected by the terminal from the plurality of CSI-RS resources can correspond to a plurality of IMRs. The correspondence relationship between at least one CSI-RS resource selected by the terminal from the plurality of CSI-RS resources and IMR will be illustrated in the subsequent embodiments, and will not be further elaborated here.

In an embodiment, the measurement result may include at least one of a first measurement result, a second measurement result, or a third measurement result. The following provide illustrative explanation of several kinds of measurement results.

In an embodiment, the terminal may perform measurement based on the at least one IMR.

For example, the terminal may perform measurements separately on each IMR in the at least one IMR, to obtain at least one first measurement result, in which one first measurement result corresponds to one IMR.

That is, the terminal performs measurement based on the at least one IMR, and the obtained measurement results may include measurement results corresponding to the at least one IMR respectively.

In an embodiment, the terminal may perform measurement based on the at least one CSI-RS resource selected from the plurality of CSI-RS resources.

For example, the terminal may perform measurement on the at least one CSI-RS resource selected from the plurality of CSI-RS resources, to obtain one second measurement result. This second measurement results corresponds to the at least one CSI-RS resource selected by the terminal from the plurality of CSI-RS resources.

For example, the terminal can determine the at least one IMR corresponding to selecting the at least one CSI-RS resource from the plurality of CSI-RS resources, and then perform measurements respectively on each IMR in the at least one IMR to obtain at least one first measurement result, in which one first measurement result corresponds to one IMR.

That is, the terminal performs measurement based on the at least one CSI-RS resource selected from the plurality of CSI-RS resources or the IMR, and the measurement result obtained may include the measurement result corresponding to the at least one CSI-RS resource or the measurement result corresponding to the IMR.

In an embodiment, the terminal may perform measurement based on the at least one CSI-RS resource selected from the plurality of CSI-RS resources and the at least one IMR, to obtain at least one measurement result.

For example, the terminal may perform measurements respectively on each IMR in the at least one IMR, to obtain the first measurement results corresponding to each IMR, and perform measurement on the at least one CSI-RS resource selected from the plurality of CSI-RS resources, to obtain the second measurement result corresponding to the at least one CSI-RS resource, and further obtain the third measurement result based on the first measurement results and the second measurement result.

In an embodiment, the measurement result, such as the first measurement result, the second measurement result, and the third measurement result, includes but is not limited to at least one of:

CQI (Channel Quality Information), PMI (Pre-coding Matrix Indication), RI (Rank Indication), LI (Layer Indication), magnitude coefficient, or phase coefficient.

In an embodiment, after obtaining the measurement result, the terminal can send the measurement result to the network device, and may also send indication information to the network device.

For example, the terminal performs measurement based on the at least one IMR, and the indication information may indicate the at least one IMR corresponding to the at least one measurement result.

For example, the terminal performs measurement based on the at least one CSI-RS resource selected from the plurality of CSI-RS resources, and the indication information may indicate the at least one CSI-RS resource selected from the plurality of CSI-RS resources corresponding to the at least one measurement result.

For example, the terminal performs measurement on the at least one CSI-RS resource selected from the plurality of CSI-RS resources and the at least one IMR, and the indication information may indicate the at least one CSI-RS resource selected from the plurality of CSI-RS resources corresponding to the at least one measurement result and the IMRs corresponding to selecting the at least one CSI-RS resource by the terminal from the plurality of CSI-RS resources.

According to embodiments of the present disclosure, the terminal can determine at least one IMR based on the first configuration information, wherein at least one IMR corresponds to the first CSI-RS resource set, which includes at least one CSI-RS resource selected by the terminal from multiple CSI-RS resources. Based on this, the IMR determined by the terminal can correspond to the first CSI-RS resource set, and one first CSI-RS resource set corresponds to one selection mode for CSI-RS resources. When the terminal has multiple selection modes for CSI-RS resources, multiple IMRs can be determined, rather than being limited to only one IMR.

One selection mode for CSI-RS resources can correspond to one or more IMRs, that is, when the terminal selects at least one CSI-RS resource from the plurality of CSI-RS resources, it can correspond to one or more IMRs.

The terminal can subsequently perform measurement based on the at least one CSI-RS resource and/or the at least one IMR to obtain at least one measurement result. Since the IMR corresponds to the at least one CSI-RS resource selected by the terminal, the measured result also corresponds to the at least one CSI-RS resource selected by the terminal, which is conducive to ensuring that the measurement results can accurately characterize the measurement results corresponding to at least one IMR when the terminal selects different CSI-RS resources.

Furthermore, the terminal sends indication information to the network device, indicating the at least one CSI-RS resource and/or the at least one IMR corresponding to the at least one measurement result, so that the network device can determine the at least one CSI-RS resource and/or the at least one IMR corresponding to the at least one measurement result, and the measurement results can accurately characterize the measurement results corresponding to at least one IMR when the terminal selects different CSI-RS resources.

Fig. 2 is a schematic flowchart of another information sending method illustrated according to an embodiment of the present disclosure. The method can be performed by the terminal. As shown in Fig. 2, in an embodiment, the information sending method further includes the following step.

In step S201, channel measurement resources (CMRs) are determined according to second configuration information sent by the network device, wherein the CMRs include the plurality of CSI-RS resources.

It should be noted that step S201 can be implemented independently, or in combination with any other embodiment disclosed in this disclosure. The specific implementation can be selected as needed, and is not limited in this disclosure.

In an embodiment, the network device can send the second configuration information to the terminal, and the second configuration information is used to configure CMRs for the terminal. The CMRs may include the plurality of CSI-RS resources. For example, the CMRs include N CSI-RS resources, where N can be set as needed. For example, N is less than or equal to cells or equal to a number of TRPs used by the network device to provide services to the terminal. For example, the number of TRPs used by the network device to provide services to the terminal is 4, and then N may be any value of 1, 2, 3 and 4.

The terminal receives the second configuration information sent by the network device, and can determine the CMRs according to the second configuration information, and the plurality of CSI-RS resources included in the CMRs. Subsequently, at least one CSI-RS resource can be selected from the plurality of CSI-RS resources included in the CMRs.

In an embodiment, the first configuration information and the second configuration information may be carried in the same configuration information. In another embodiment, the first configuration information and the second configuration information may be carried in different configuration information.

In an embodiment, the IMR may correspond to an identifier. For example, the network device configures multiple IMRs for the terminal through the first configuration information, and one IMR corresponding to one identifier. The correspondence relationship between the identifiers and the IMRs may be configured by the network device to the terminal, or may be determined by the terminal based on a protocol agreement. The terminal can determine the IMR corresponding to the identifier and the identifier corresponding to the IMR according to the correspondence relationship between the identifiers and the IMRs. The identifier may also be referred to as index, or number. The following embodiments illustrate the identifiers corresponding to the IMRs.

In an embodiment, the identifier corresponding to the IMR is a first identifier. The first identifier is configured to distinguish IMRs contained in a first set, and the IMRs in the first set include IMRs corresponding to a plurality of selection modes of the terminal for selecting CSI-RS resources in the plurality of CSI-RS resources. It can be understood that a plurality of CSI-RS resource sets can be determined according to these selection modes for selecting CSI-RS resources, in which each IMR in each selection mode corresponds to one first identifier. In an example, the first identifier may be understood as a global identifier, used to uniquely identify the IMR under a selection mode for selecting the CSI-RS resource set.

In an embodiment, when the terminal selects at least one CSI-RS resource in a plurality of CSI-RS resources, there may be multiple selection modes. Taking the plurality of CSI-RS resources being 2 CSI-RS resources as an example, these 2 CSI-RS resources being CSI-RS#1 and CSI-RS#2, when the terminal selects at least one CSI-RS resource from these 2 CSI-RS resources, there may be 3 selection modes:

Selection mode 1: the terminal selects CSI-RS#1 and CSI-RS#2;
Selection mode 2: the terminal selects CSI-RS#1;
Selection mode 3: the terminal selects CSI-RS#2.

One selection mode may correspond to one or more IMRs. For example, selection mode 1 corresponds to 1 IMR, and the 1 IMR corresponding to selection mode 1 is used to measure interference from outside of CSI-RS#1 and CSI-RS#2; selection mode 2 corresponds to 2 IMRs, one IMR is used to measure interference from outside of CSI-RS#1 and CSI-RS#2, and the other IMR is used to measure interference from outside of CSI-RS#1; selection mode 3 corresponds to 2 IMRs, one IMR is used to measure interference from outside of CSI-RS#1 and CSI-RS#2, and the other IMR is used to measure interference from outside of CSI-RS#2.

The IMRs in the first set include IMRs corresponding to multiple selection modes of the terminal for selecting CSI-RS resources in the plurality of CSI-RS resources. For example, the IMRs in the first set include IMRs corresponding to three selection modes of the terminal for selecting CSI-RS resources in the above 2 CSI-RS resources, that is, 5 IMRs.

The network device or the protocol agreement can determine the first identifier for each IMR in the IMRs corresponding to the multiple selection modes. For example, the above three selection modes correspond to 5 IMRs, and then the first identifier can be determined for each IMR in the 5 IMRs, and the identifiers of the IMRs may be 1 to 5.

For example, the identifier of the one IMR#1 corresponding to selection mode 1 is 1; the identifier of IMR#2 for measuring interference from outside of CSI-RS#1 and CSI-RS#2 corresponding to selection mode 2 is 2; the identifier of IMR#3 for measuring interference from outside of CSI-RS#1 corresponding to selection mode 2 is 3; the identifier of IMR#4 for measuring interference from outside of CSI-RS#1 and CSI-RS#2 corresponding to selection mode 3 is 4; and the identifier of IMR#5 for measuring interference from outside of CSI-RS#2 corresponding to selection mode 3 is 5.

In an embodiment, taking the plurality of CSI-RS resources being N CSI-RS resources as example, the number of selection modes of the terminal for selecting CSI-RS resources in the N CSI-RS resources can be determined based on the following formula:

$$C_N^N + C_N^{N-1} + \cdots + C_N^{N-i} + \cdots + C_N^1 \quad ;$$

when the selection mode is selecting N-i CSI-RS resources in the N CSI-RS resources, the number of corresponding IMRs can be determined based on the following formula:

$$C_N^{N-i} \cdot 2^i \quad ;$$

where, $C_N^{N-i}$ represents the number of selection modes for selecting N-i CSI-RS resources in the N CSI-RS resources, N is a positive integer greater than or equal to 2, and i is a positive integer greater than or equal to 1 and less than and equal to N.

Based on the above formulas, for example, when N=2, the number of selection modes for selecting CSI-RS resources in the 2 CSI-RS resources is 3. The total number of IMRs corresponding to these 3 selection modes for CSI-RS resources is 5, and the identifier is determined for each IMR in the 5 IMRs, and the first identifiers of the IMRs may be 1 to 5.

For example, when N=3, the number of selection modes for selecting CSI-RS resources in the 3 CSI-RS resources is 7. The total number of IMRs corresponding to these 7 selection modes for CSI-RS resources is 19, and the identifier is determined for each IMR in the 19 IMRs, and the first identifiers of the IMRs may be 1 to 19.

For example, when N=4, the number of selection modes for selecting CSI-RS resources in the 4 CSI-RS resources is 15. The total number of IMRs corresponding to these 15 selection modes for CSI-RS resources is 65, and the identifier is determined for each IMR in the 65 IMRs, and the first identifiers of the IMRs may be 1 to 65.

It should be noted that, the interference corresponding to multiple IMRs corresponding to multiple selection modes may be the same. For example, for two IMRs with the same corresponding interference, although the interference corresponding to these two IMRs is the same, the selection modes of the CSI-RS resources corresponding to these two IMRs may be different, so the two IMRs correspond to different identifiers. For example, when N=3, there may be two IMRs with the same interference in the 19 IMRs, but due to the different selection modes of CSI-RS resources corresponding to the two IMRs, the two IMRs correspond to different identifiers.

Since the first identifier is used to distinguish the IMR contained in the first set, which includes the IMRs corresponding to multiple selection modes of the terminal for selecting CSI-RS resources in the plurality of CSI-RS resources, the first identifier can also be referred to as the global identifier of the IMR.

In an embodiment, the indication information is used to indicate the first identifier of the IMR corresponding to the measurement result.

The terminal sends the indication information to the network device, indicating the first identifier of the IMR corresponding to the measurement result. The network device can determine the first identifier of the IMR corresponding to the received measurement result based on the indication information, and then determine the IMR corresponding to the first identifier based on the correspondence between the identifier and the IMR, that is, the IMR corresponding to the received measurement result.

Taking the terminal selecting at least one CSI-RS resource from two CSI-RS resources as an example, based on the previous example, it can be seen that there are a total of five IMRs in this case, with identifiers ranging from 1 to 5.

For example, the terminal sends a measurement result corresponding to an IMR to the network device, and the first identifier indicated by the indication information is 3.

The network device can determine the IMR corresponding to the received measurement result as IMR#3 based on the first indication information, and the measurement result can characterize interference from outside of CSI-RS#1.

For example, the terminal sends measurement results corresponding to two IMRs to the network device, namely measurement result#1 and measurement result#2, with the first identifiers indicated by the indication information being 4 and 5.

After receiving the measurement results and indication information, the network device can determine that the first identifier corresponding to measurement result#1 is 4 and the first identifier corresponding to measurement result#2 is 5 based on the measurement results and the relationship between the first identifier and the IMR. Furthermore, based on the first identifier 4, it can be determined that measurement result#1 corresponds to IMR#4, which is used to characterize interference from outside of CSI-RS# 1 and CSI-RS#2; and based on the first identifier 5, it can be determined measurement result#2 as the measurement result corresponding to IMR#5, which is used to characterize interference from outside of CSI-RS#2.

It should be noted that the correspondence relationship between the IMR and the first identifier may be indicated by the network device to the terminal in advance, or may be specified in the protocol.

In an embodiment, the indication information is carried in a first part (part I) of CSI, or carried in a second part (part II) of CSI. A size of the first part of CSI is fixed. The size refers to the number of bits occupied.

Due to the fact that when indicating the first identifier in the indication information, the first identifier is the identifier of the IMR in the IMRs corresponding to all the selection modes of the terminal for selecting CSI-RS resources in the plurality of CSI-RS resources, and the total number of IMRs corresponding to all the selection modes is fixed, the maximum value of the first identifier is fixed. Therefore, the size of the indication information used to indicate the first identifier can also be fixed, and the size of the first part of the CSI carrying the indication information can also be fixed.

For example, when the terminal selects at least one CSI-RS resource from two CSI-RS resources, and the maximum first identifier is 5, the size of the indication information can be 3 bits. For example, when the terminal selects at least one CSI-RS resource from three CSI-RS resources, the maximum first identifier is 19, and the size of the indication information can be 5 bits. For example, when the terminal selects at least one CSI-RS resource from four CSI-RS resources, the maximum first identifier is 65, and the size of the indication information can be 7 bits.

In an embodiment, the identifier corresponding to the IMR includes a second identifier, which is used to distinguish the IMRs contained in the second set. The IMRs contained in the second set include the IMRs corresponding to one selection mode of the terminal for selecting CSI-RS resources in the multiple CSI-RS resources. It can be understood that multiple sets of CSI-RS resources can be determined based on the selection modes of these multiple CSI-RS resources, where each selection mode corresponds to one or more IMRs, which are numbered independently. In an example, the second identifier can be understood as a local identifier used to uniquely identify the identifier of each IMR under a selection mode of a set of CSI-RS resources.

When the terminal selects at least one CSI-RS resource from the plurality of CSI-RS resources, there may be multiple selection modes. Taking the plurality of CSI-RS resources being 2 CSI-RS resources as an example, the 2 CSI-RS resources being CSI-RS#1 and CSI-RS#2, when the terminal selects at least one CSI-RS resource in the 2 CSI-RS resources, there may be 3 selection modes:

Selection mode 1: the terminal selects CSI-RS#1 and CSI-RS#2;
Selection mode 2: the terminal selects CSI-RS#1;
Selection mode 3: the terminal selects CSI-RS#2.

One selection mode can correspond to one or more IMRs. For example, selection mode 1 corresponds to 1 IMR, and the 1 IMR corresponding to selection mode 1 is used to measure interference from outside of CSI-RS#1 and CSI-RS#2; selection mode 2 corresponds to 2 IMRs, one IMR is used to measure interference from outside of CSI-RS#1 and CSI-RS#2, and the other IMR is used to measure interference from outside of CSI-RS#1; selection mode 3 corresponds to 2 IMRs, one IMR is used to measure interference from outside of CSI-RS#1 and CSI-RS#2, and the other IMR is used to measure interference from outside of CSI-RS#2.

The IMRs in the second set include the IMRs corresponding to one selection mode of the terminal for selecting CSI-RS resources in the plurality of CSI-RS resources. The number of second sets is equal to the number of selection modes.

For example, when N=2, there are three selection modes, so there can be three second sets: second set#1, second set#2, and second set#3. The IMRs in the second set#1 include the corresponding IMRs when the terminal selects CSI-RS#1 and CSI-RS#2 from 2 CSI-RS resources, that is, 1 IMR; the IMRs in the second set#2 include the corresponding IMRs when the terminal selects CSI-RS#1 from 2 CSI-RS resources, that is, 2 IMRs; The IMRs in the second set#3 include the corresponding IMRs when the terminal selects CSI-RS#2 from 2 CSI-RS resources, that is, 3 IMRs.

The network device or protocol agreement can determine a second identifier for each IMR in the IMRs corresponding to one selection mode. When the selection mode corresponds to only one IMR, the IMR corresponding to this selection mode is fixed, and the IMR can be determined based on the selection mode. Therefore, it is not necessary to determine a second identifier for the IMR corresponding to this selection mode, and the indication information can only be used to indicate the at least one CSI-RS resource selected by the terminal from the plurality of CSI-RS resources. Of course, a second identifier can also be determined for the IMR corresponding to this selection mode, but since this selection mode only corresponds to one IMR, then it only corresponds to the second identifier of one IMR.

For example, if one IMR#1 corresponds to selection mode 1, then the IMR corresponding to this selection model is fixed and there is no need to set a second identifier for the IMR. The second identifier for IMR#2 used to measure interference from outside of CSI-RS#1 and CSI-RS#2 corresponding to selection mode 2 is 1; the second identifier for IMR#3 used to measure interference from outside of CSI-RS#1 corresponding to selection mode 2 is 2. The second identifier for IMR#4 used to measure interference from outside of CSI-RS#1 and CSI-RS#2 corresponding to selection mode 3 is 1; the second identifier for IMR#5 used to measure interference from outside of CSI-RS#2 corresponding to selection mode 3 is 2.

In an embodiment, the indication information includes first indication information and/or second indication information, wherein the first indication information indicates the at least one CSI-RS resource selected by the terminal in the plurality of CSI-RS resources, and the second indication information indicates the second identifier of the IMR corresponding to the measurement result.

Since the second identifier is the identifier of the IMR in the IMRs corresponding to a selection mode of the terminal for selecting CSI-RS resources in the plurality of CSI-RS resources, the second identifier of the IMR may be different in the IMRs corresponding to the same selection mode, but the second identifier of the IMR may be the same in the IMRs corresponding to different selection modes. For example, IMR#3 corresponding to the above selection mode 2 and IMR#4 corresponding to the selection mode 3 have the same second identifier, both of which are 1.

Therefore, in order to ensure that the network device accurately distinguish the IMR based on the second identifier, the indication information sent by the terminal to the network device may include the first indication information and the second indication information. The first indication information is used to indicate the at least one CSI-RS resource selected by the terminal from multiple CSI-RS resources, that is, to indicate the selection mode of the terminal for selecting CSI-RS resources. The second indication information is used to indicate the second identifier of the IMR corresponding to the measurement result sent to the network device.

The network device can determine the selection mode of the terminal for selecting CSI-RS resources based on the first indication information, and can determine the second identifier of the IMR corresponding to the received measurement result based on the second indication information, thereby accurately determining the IMR corresponding to the measurement result.

Take selecting at least one CSI-RS resource by the terminal in 2 CSI-RS resources as an example.

For example, the terminal sends the measurement result corresponding to one IMR to the network device. The first indication information is used to indicate that the terminal has selected CSI-RS#1 in the 2 CSI-RS resources, and the second indication information is used to indicate that the second identifier is 1.

Based on the first indication information and the second indication information, the network device can determine that the IMR corresponding to the measurement result is the IMR with the second identifier of 1 when the terminal selects CSI-RS#1 from the two CSI-RS resources, that is, IMR#2.

For example, the terminal sends measurement results corresponding to two IMRs to the network device, namely measurement result#1 and measurement result#2. The first indication information is used to indicate that the terminal has selected CSI-RS#2 in the three CSI-RS. The second indication information is used to indicate that the second identifiers are 1 and 2.

After receiving the measurement results and the indication information, the network device can determine that the second identifier corresponding to measurement result#1 is 1 and the second identifier corresponding to measurement result#2 is 2 based on the relationship between the measurement results and the second identifiers corresponding to IMRs. Furthermore, based on the first indication information and the second indication information, it can be determined that measurement result#1 is corresponding to the IMR with the second identifier of 1 when the terminal selects CSI-RS#2 in the 2 CSI-RS resources, that is, IMR#4; and measurement result#2 is corresponding to the IMR with the second identifier of 2 when the terminal selects CSI-RS#2 in the 2 CSI-RS resources, i.e. IMR#5.

It should be noted that the relationship between IMR and the second identifier can be indicated to the terminal in advance by the network device, or can be specified in the protocol.

Since the second identifier is the identifier of the IMR in the IMRs corresponding to one selection mode of the terminal for selecting CSI-RS resources in multiple CSI-RS resources, the second identifier can also be referred to as the local identifier of the IMR.

In an embodiment, the indication information sent by the terminal to the network device may also include only the first indication information and not the second indication information.

For example, when the selection mode corresponds to only one IMR, the IMR corresponding to the selection mode is fixed. The terminal can ensure that the network device can accurately determine the IMR corresponding to the measurement result by indicating the selection mode through the first indication information, without having to send the second indication information. This is conducive to saving communication resources. In this case, the indication information sent by the terminal to the network device is only used to indicate the at least one CSI-RS resource selected by the terminal from the plurality of CSI-RS resources.

It should be noted that when the identifier corresponding to IMR is the first identifier, the terminal can also send indication information to the network device indicating the CSI-RS resources selected by the terminal in the plurality of CSI-RS resources, so that the network device can determine the CSI-RS resources selected by the terminal in the plurality of CSI-RS resources.

In an embodiment, the first indication information is carried in the first part (part I) of CSI, and the second indication information is carried in the first part (part I) or the second part (part II) of CSI. The size of the first part of CSI is fixed, and the size of the second part of CSI is fixed or variable.

In an embodiment, the first indication information is used to indicate at least one CSI-RS resource selected by the terminal in the plurality of CSI-RS resources, that is, to indicate the selection mode of the terminal for selecting CSI-RS resources in the plurality of CSI-RS resources, and in the case where the plurality of CSI-RS resources have been determined, the number of the plurality of CSI-RS resources is fixed, and the number of selection modes for CSI-RS resources in the plurality of CSI-RS resources is fixed. Therefore, the size of the first indication information that can be used to indicate the selection mode can be fixed, and the size of the first part of CSI carrying the first indication information can also be fixed.

For example, when the plurality of CSI-RS resources consist of 2 CSI-RS resources, the size of the first indication information can be 2 bits, and 2 bits correspond to the selection in 2 CSI-RS resources; when the plurality of CSI-RS resources consist of 3 CSI-RS resources, the size of the first indication information can be 3 bits, and 3 bits correspond to the selection in 3 CSI-RS resources; when the plurality of CSI-RS resources consist of 4 CSI-RS resources, the size of the first indication information can be 4 bits, and 4 bits correspond to the selection in 4 CSI-RS resources.

In an embodiment, when the second indication information is carried in the first part of the CSI, due to the fixed size of the first part of the CSI, in order to ensure that the second indication information can indicate the second identifiers of the IMRs corresponding to each selection mode, the number of IMRs corresponding to each selection mode can be determined, and then the size of the second indication information can be determined based on the maximum number of IMRs.

For example, taking the terminal selecting at least one CSI-RS resource from 4 CSI-RS resources as an example, there are 15 selection modes. When the selection mode is to select N-i CSI-RS resources from N CSI-RS resources, the corresponding number of IMRs can be determined based on the previous formula $2^i$. The number of IMRs corresponding to each selection mode can be determined as 1, 2, 4, and 8, respectively. The maximum number of IMRs is 8. Therefore, the size of the second indication information can be determined based on 8, for example, the size is 3 bits.

In an embodiment, when the second indication information is carried in the second part of CSI, the size of the second indication information may vary based on the number of IMRs corresponding to the selection mode, as the terminal may select different CSI-RS resources in the plurality of CSI-RS resources, and the size of the second part of CSI carrying the second indication information may also vary.

Take selecting at least one CSI-RS resource by the terminal in 4 CSI-RS resources as an example.

When the terminal selects 3 CSI-RS resources in the 4 CSI-RS resources, for example, CSI-RS#1 is not selected, and CSI-RS#2, CSI-RS#3, and CSI-RS#4 are selected, it is corresponding to 2 IMRs, where the first IMR corresponds to interference from outside of the 4 CSI-RS resources, and the second IMR corresponds to interference from outside of CSI-RS#2, CSI-RS#3, and CSI-RS#4. Therefore, the size of the second indication information can be 1 bit, which can indicate the second identifiers of 2 IMRs.

When the terminal selects 2 CSI-RS resources in the 4 CSI-RS resources, for example, CSI-RS#1 and CSI-RS#2 are not selected, and CSI-RS#3 and CSI-RS#4 are selected, it is corresponding to 4 IMRs, where the first IMR corresponds to interference from outside of the 4 CSI-RS resources, the second IMR corresponds to interference from outside of CSI-RS#3 and CSI-RS#4, the third IMR corresponds to interference from outside of CSI-RS#3, CSI-RS#4 and CSI-RS#1, and the fourth IMR corresponds to interference from outside of CSI-RS#3, CSI-RS#4 and CSI-RS#2. Therefore, the size of the second indication information can be 2 bits, which can indicate the second identifiers of 4 IMRs.

When the terminal selects 1 CSI-RS resources in the 4 CSI-RS resources, for example, CSI-RS#1 is selected, and CSI-RS#2, CSI-RS#3 and CSI-RS#4 are not selected, it is corresponding to 8 IMRs, where the first IMR corresponds to interference from outside of the 4 CSI-RS resources, the second IMR corresponds to interference from outside of CSI-RS#1, the third IMR corresponds to interference from outside of CSI-RS#1 and CSI-RS#2, the fourth IMR corresponds to interference from outside of CSI-RS#1 and CSI-RS#3, the fifth IMR corresponds to interference from outside of CSI-RS#1 and CSI-RS#4, the sixth IMR corresponds to interference from outside of CSI-RS#1, CSI-RS#2 and CSI-RS#3, the seventh IMR corresponds to interference from outside of CSI-RS#1, CSI-RS#2 and CSI-RS#4, and the eighth IMR corresponds to interference from outside of CSI-RS#1, CSI-RS#3 and CSI-RS#4. Therefore, the size of the second indication information can be 3 bits, which can indicate the second identifiers of 8 IMRs.

The following illustrates the first identifier and the second identifier through several tables.

Table 1 shows the identifiers of the corresponding IMRs when the terminal selects at least one CSI-RS resource from two CSI-RS resources.

Table 1

| Selection mode | IMR | First identifier | Second identifier |
|---|---|---|---|
| Select CSI-RS#1 and CSI-RS#2 | one: used to measure interference from outside of CSI-RS#1 and CSI-RS#2 | 1 | empty |
| Select CSI-RS#1 | first: used to measure interference from outside of CSI-RS#1 and CSI-RS#2<br>second: used to measure interference from outside of CSI-RS#1 | 2 and 3 | land 2 |
| Select CSI-RS#2 | first: used to measure interference from outside of CSI-RS#1 and CSI-RS#2<br>second : used to measure interference from outside of CSI-RS#2 | 4 and 5 | 1 and 2 |

As shown in Table 1, when the terminal selects at least one CSI-RS resource from 2 CSI-RS resources, there may be 3 selection modes.

When the terminal selects CSI-RS#1 and CSI-RS#2, it is corresponding to one IMR. The first identifier of the IMR may be 1. Since one IMR is corresponding to selecting CSI-RS#1 and CSI-RS#2, that is, the IMR corresponding to selecting CSI-RS#1 and CSI-RS#2 is fixed, the network device only needs to determine that the selection mode is to select CSI-RS#1 and CSI-RS#2, and then then can accurately determine the IMR corresponding to the selection mode, so there is no need to set the second identifier.

When the terminal selects CSI-RS#1, it corresponds to 2 IMRs; when the terminal selects CSI-RS#2, it corresponds to 2 IMRs. When CSI-RS#1 is selected, the first identifiers of the two IMRs corresponding to it can be 2 and 3, and the second identifiers of the two IMRs can be 1 and 2. When CSI-RS#2 is selected, the first identifiers for the two IMRs corresponding to it can be 4 and 5, and the second identifiers for the two IMRs corresponding to it can be 1 and 2.

When the indication information sent by the terminal to the network device is used to indicate the first identifiers, the size of the indication information can be 3 bits and can be used to indicate the first identifiers 1 to 5.

When the indication information sent by the terminal to the network device includes the first indication information and the second indication information, the size of the first indication information can be 2 bits, used to indicate the terminal's selection in 2 CSI-RS resources; the size of the second indication information can be 1 bit, used to indicate the second identifiers 1 and 2.

Table 2 shows the identifiers of the corresponding IMRs when the terminal selects at least one CSI-RS resource from three CSI-RS resources (CSI-RS#1, CSI-RS#2, and CSI-RS#3).

Table 2

| Selection mode | IMR | First identifier | Second identifier |
|---|---|---|---|
| Select CSI-RS#1, CSI-RS#2 and CSI-RS#3 | One: used to measure interference from outside of CSI-RS#1, CSI-RS#2 and CSI-RS#3 | 1 | Empty |
| Select CSI-RS#2 and CSI-RS#3 | first: used to measure interference from outside of CSI-RS#1, CSI-RS#2 and CSI-RS#3; second: used to measure interference from outside of CSI-RS#2 and CSI-RS#3 | 2 and 3 | 1 and 2 |
| Select CSI-RS#1 and CSI-RS#3 | first: used to measure interference from outside of CSI-RS#1, CSI-RS#2 and CSI-RS#3; second: used to measure interference from outside of CSI-RS#1 and CSI-RS#3 | 4 and 5 | 1 and 2 |
| Select CSI-RS#1 and CSI-RS#2 | first: used to measure interference from outside of CSI-RS#1, CSI-RS#2 and CSI-RS#3; second: used to measure interference from outside of CSI-RS#1 and CSI-RS#2 | 6 and 7 | 1 and 2 |
| Select CSI-RS#1 | first: used to measure interference from outside of CSI-RS#1, CSI-RS#2 and CSI-RS#3; second: used to measure interference from outside of CSI-RS#1; third: used to measure interference from outside of CSI-RS#1 and CSI-RS#2; fourth: used to measure interference from outside of CSI-RS#1 and CSI-RS#3 | 8 to 11 | 1 to 4 |
| Select CSI-RS#2 | first: used to measure interference from outside of CSI-RS#1, CSI-RS#2 and CSI-RS#3; second: used to measure interference from outside of CSI-RS#2; third: used to measure interference from outside of CSI-RS#2 and CSI-RS#1; fourth: used to measure interference from outside of CSI-RS#2 and CSI-RS#3; | 12 to 15 | 1 to 4 |
| Select CSI-RS#3 | first: used to measure interference from outside of CSI-RS#1, CSI-RS#2 and CSI-RS#3; second: used to measure interference from outside of CSI-RS#3; third: used to measure interference from outside of CSI-RS#3 and CSI-RS#1 ; fourth: used to measure interference from outside of CSI-RS#3 and CSI-RS#2 | 16 to 19 | 1 to 4 |

As shown in Table 2, when the terminal selects at least one CSI-RS in three CSI-RS resources, there may be seven selection modes.

When the terminal selects CSI-RS#1, CSI-RS#2, and CSI-RS#3, it is corresponding to one IMR. The first identifier of the IMR can be 1. However, since one IMR is corresponding to selecting CSI-RS#1, CSI-RS#2, and CSI-RS#3, that is, the IMR corresponding to selecting CSI-RS#1, CSI-RS#2, and CSI-RS#3 is fixed, the network device only needs to determine that the selection mode is selecting CSI-RS#1, CSI-RS#2, and CSI-RS#3, and then can accurately determine the IMR corresponding to the selection mode, so there is no need to set the second identifier.

When the terminal selects CSI-RS#2 and CSI-RS#3, it is corresponding to two IMRs, where the first identifiers of the two IMRs can be 2 and 3, and the second identifiers of the two IMRs can be 1 and 2. The situation where the terminal selects any two CSI-RS resources is similar and will not be repeated here.

When the terminal selects CSI-RS#1, it corresponds to 4 IMRs, where the first identifiers of the 4 IMRs can be 8, 9, 10, 11, and the second identifiers of the 4 IMRs can be 1, 2, 3, 4. The situation where the terminal selects any one of the CSI-RS resources is similar and will not be repeated here.

When the indication information sent by the terminal to the network device is used to indicate the first identifiers, the size of the indication information can be 5 bits, which can be used to indicate the first identifiers 1 to 19.

When the indication information sent by the terminal to the network device includes the first indication information and the second indication information, the size of the first indication information can be 3 bits, used to indicate the terminal's selection in 3 CSI-RS resources. When the size of the second indication information is fixed, it can be 2 bits, used to indicate the second identifiers 1 to 4. When the size of the second indication information is variable, it can be 1 bit or 2 bits, where 1 bit is used to indicate the second identifiers 1 to 2, and 2 bits are used to indicate the second identifiers 1 to 4.

Table 3 shows the identifiers of the corresponding IMRs when the terminal selects at least one CSI-RS resource in four CSI-RS resources.

Table 3

| Selection mode | IMR | First identifier | Second identifier |
|---|---|---|---|
| Select CSI-RS#1, CSI-RS#2, CSI-RS#3 and CSI-RS#4 | one: used to measure interference from outside of CSI-RS#1, CSI-RS#2, CSI-RS#3 and CSI-RS#4 | 1 | Empty |
| Select CSI-RS#2, CSI-RS#3 and CSI-RS#4 | first: used to measure interference from outside of CSI-RS#1, CSI-RS#2, CSI-RS#3 and CSI-RS#4; second: used to measure interference from outside of CSI-RS#2, CSI-RS#3 and CSI-RS#4 | 2 and 3 | 1 and 2 |
| Select CSI-RS#1, CSI-RS#3 and CSI-RS#4 | firs: used to measure interference from outside of CSI-RS#1, CSI-RS#2, CSI-RS#3 and CSI-RS#4; second: used to measure interference from outside of CSI-RS#1, CSI-RS#3 and CSI-RS#4 | 4 and 5 | 1 and 2 |
| Select CSI-RS#1, CSI-RS#2 and CSI-RS#4 | first: used to measure interference from outside of CSI-RS#1, CSI-RS#2, CSI-RS#3 and CSI-RS#4; second: used to measure interference from outside of CSI-RS#1, CSI-RS#2 and CSI-RS#4 | 6 and 7 | 1 and 2 |
| Select CSI-RS#1, CSI-RS#2 and CSI-RS#3 | first: used to measure interference from outside of CSI-RS#1, CSI-RS#2, CSI-RS#3 and CSI-RS#4; second: used to measure interference from outside of CSI-RS#1, CSI-RS#2 and CSI-RS#3 | 8 and 9 | 1 and 2 |
| Select CSI-RS#3 and CSI-RS#4 | first: used to measure interference from outside of CSI-RS#1, CSI-RS#2, CSI-RS#3 and CSI-RS#4; second: used to measure interference from outside of CSI-RS#3 and CSI-RS#4; third: used to measure interference from outside of CSI-RS#3, CSI-RS#4 and CSI-RS#1; fourth: used to measure interference from outside of CSI-RS#3, CSI-RS#4 and CSI-RS#2 | 10 to 13 | 1 to 4 |

(continued)

| Selection mode | IMR | First identifier | Second identifier |
|---|---|---|---|
| Select CSI-RS#2 and CSI-RS#4 | first: used to measure interference from outside of CSI-RS#1, CSI-RS#2, CSI-RS#3 and CSI-RS#4;<br>second: used to measure interference from outside of CSI-RS#2 and CSI-RS#4;<br>third: used to measure interference from outside of CSI-RS#2, CSI-RS#4 and CSI-RS#1;<br>fourth: used to measure interference from outside of CSI-RS#2, CSI-RS#4 and CSI-RS#3 | 14 to 17 | 1 to 4 |
| Select CSI-RS#2 and CSI-RS#3 | first: used to measure interference from outside of CSI-RS#1, CSI-RS#2, CSI-RS#3 and CSI-RS#4;<br>second: used to measure interference from outside of CSI-RS#2 and CSI-RS#3;<br>third: used to measure interference from outside of CSI-RS#2, CSI-RS#3 and CSI-RS#1;<br>fourth: used to measure interference from outside of CSI-RS#2, CSI-RS#3 and CSI-RS#4 | 18 to 21 | 1 to 4 |
| Select CSI-RS#1 and CSI-RS#4 | first: used to measure interference from outside of CSI-RS#1, CSI-RS#2, CSI-RS#3 and CSI-RS#4;<br>second: used to measure interference from outside of CSI-RS#1 and CSI-RS#4;<br>third: used to measure interference from outside of CSI-RS#1, CSI-RS#4 and CSI-RS#2;<br>fourth: used to measure interference from outside of CSI-RS#1, CSI-RS#4 and CSI-RS#3 | 22 to 25 | 1 to 4 |
| Select CSI-RS#1 and CSI-RS#3 | first: used to measure interference from outside of CSI-RS#1, CSI-RS#2, CSI-RS#3 and CSI-RS#4;<br>second: used to measure interference from outside of CSI-RS#1 and CSI-RS#3;<br>third: used to measure interference from outside of CSI-RS#1, CSI-RS#3 and CSI-RS#2;<br>fourth: used to measure interference from outside of CSI-RS#1, CSI-RS#3 and CSI-RS#4 | 26 to 29 | 1 to 4 |
| Select CSI-RS#1 and CSI-RS#2 | first: used to measure interference from outside of CSI-RS#1, CSI-RS#2, CSI-RS#3 and CSI-RS#4;<br>second: used to measure interference from outside of CSI-RS#1 and CSI-RS#2;<br>third: used to measure interference from outside of CSI-RS#1, CSI-RS#2 and CSI-RS#3;<br>fourth: used to measure interference from outside of CSI-RS#1, CSI-RS#2 and CSI-RS#4 | 30 to 33 | 1 to 4 |

(continued)

| Selection mode | IMR | First identifier | Second identifier |
|---|---|---|---|
| Select CSI-RS#1 | first: used to measure interference from outside of CSI-RS#1, CSI-RS#2, CSI-RS#3 and CSI-RS#4;<br>second: used to measure interference from outside of CSI-RS#1;<br>third: used to measure interference from outside of CSI-RS#1 and CSI-RS#2;<br>fourth: used to measure interference from outside of CSI-RS#1 and CSI-RS#3;<br>fifth: used to measure interference from outside of CSI-RS#1 and CSI-RS#4;<br>sixth: used to measure interference from outside of CSI-RS#1, CSI-RS#2 and CSI-RS#3;<br>seventh: used to measure interference from outside of CSI-RS#1, CSI-RS#2 and CSI-RS#4;<br>eighth: used to measure interference from outside of CSI-RS#1, CSI-RS#3 and CSI-RS#4 | 34 to 41 | 1 to 8 |
| Select CSI-RS#2 | first: used to measure interference from outside of CSI-RS#1, CSI-RS#2, CSI-RS#3 and CSI-RS#4;<br>second: used to measure interference from outside of CSI-RS#2;<br>third: used to measure interference from outside of CSI-RS#2 and CSI-RS#1;<br>fourth: used to measure interference from outside of CSI-RS#2 and CSI-RS#3;<br>fifth: used to measure interference from outside of CSI-RS#2 and CSI-RS#4;<br>sixth: used to measure interference from outside of CSI-RS#2, CSI-RS#1 and CSI-RS#3;<br>seventh: used to measure interference from outside of CSI-RS#2, CSI-RS#1 and CSI-RS#4;<br>eighth: used to measure interference from outside of CSI-RS#2, CSI-RS#3 and CSI-RS#4 | 42 to 49 | 1 to 8 |
| Select CSI-RS#3 | first: used to measure interference from outside of CSI-RS#1, CSI-RS#2, CSI-RS#3 and CSI-RS#4;<br>second: used to measure interference from outside of CSI-RS#3;<br>third: used to measure interference from outside of CSI-RS#3 and CSI-RS#1;<br>fourth: used to measure interference from outside of CSI-RS#3 and CSI-RS#2;<br>fifth: used to measure interference from outside of CSI-RS#3 and CSI-RS#4; | 50 to 57 | 1 to 8 |

(continued)

| Selection mode | IMR | First identifier | Second identifier |
|---|---|---|---|
| | sixth: used to measure interference from outside of CSI-RS#3, CSI-RS#1 and CSI-RS#2;<br><br>seventh: used to measure interference from outside of CSI-RS#3, CSI-RS#1 and CSI-RS#4;<br><br>eighth: used to measure interference from outside of CSI-RS#3, CSI-RS#2 and CSI-RS#4 | | |
| Select CSI-RS#4 | first: used to measure interference from outside of CSI-RS#1, CSI-RS#2, CSI-RS#3 and CSI-RS#4;<br><br>second: used to measure interference from outside of CSI-RS#4;<br><br>third: used to measure interference from outside of CSI-RS#4 and CSI-RS#1;<br><br>fourth: used to measure interference from outside of CSI-RS#4 and CSI-RS#2;<br><br>fifth: used to measure interference from outside of CSI-RS#4 and CSI-RS#3;<br><br>sixth: used to measure interference from outside of CSI-RS#4, CSI-RS#1 and CSI-RS#2;<br><br>seventh: used to measure interference from outside of CSI-RS#4, CSI-RS#1 and CSI-RS#3;<br><br>eighth: used to measure interference from outside of CSI-RS#4, CSI-RS#2 and CSI-RS#3 | 58 to 64 | 1 to 8 |

As shown in Table 3, when the terminal selects at least one CSI-RS in four CSI-RS resources, there may be 15 selection modes.

When the terminal selects CSI-RS#1, CSI-RS#2, CSI-RS#3 and CSI-RS#4, it corresponds to one IMR. The first identifier of the IMR can be 1. Since one IMR is corresponding to selecting CSI-RS#1, CSI-RS#2, CSI-RS#3, and CSI-RS#4, that is, the IMR is fixed when selecting CSI-RS#1, CSI-RS#2, CSI-RS#3, and CSI-RS#4, it is only necessary to determine the selection mode as selecting CSI-RS#1, CSI-RS#2, CSI-RS#3, and CSI-RS#4, and then the IMR corresponding to the selection mode can be accurately determined, so there is no need to set the second identifier.

When the terminal selects CSI-RS#2, CSI-RS#3 and CSI-RS#4, it corresponds to 2 IMRS, where the first identifiers of the 2 IMRs can be 2 and 3, and the second identifiers of the 2 IMRs can be 1 and 2. The situation where the terminal selects any other three CSI-RS resources is similar and will not be repeated here.

When the terminal selects CSI-RS#3 and CSI-RS#4, it corresponds to 4 IMRs, where the first identifiers of the 4 IMRs can be 10, 11, 12 and 13, and the second identifiers of the 4 IMRs can be 1, 2, 3 and 4. The situation where the terminal selects any other two CSI-RS resources is similar and will not be repeated here.

When the terminal selects CSI-RS#1, it corresponds to 8 IMRs, where the first identifiers of the 8 IMRs can be 34, 35, 36, 37, 38, 39, 40 and 41, and the second identifiers of the 8 IMRs can be 1, 2, 3, 4, 5, 6, 7 and 8. The situation where the terminal selects any other CSI-RS resource is similar and will not be repeated here.

When the indication information sent by the terminal to the network device is used to indicate the first identifiers, the size of the indication information can be 7 bits, used to indicate the first identifiers 1 to 65.

When the indication information sent by the terminal to the network device include the first indication information and the second indication information, the size of the first indication information can be 4 bits, used to indicate the terminal's selection in the 4 CSI-RS resources. When the size of the second indication information is fixed, it can be 3 bits, used to indicate the second identifiers 1 to 8. When the size of the second indication information is variable, it can be 1 bit, 2 bits or 3 bits, where 1 bit is used to indicate the second identifiers 1 and 2, 2 bits are used to indicate the second identifiers 1 to 4, and 3 bits are used to indicate the second identifiers 1 to 8.

It should be noted that each element in the tables involved in all implementations of this disclosure exists independently, and these elements are listed in the same table as an example. However, this does not mean that all elements in the table must exist simultaneously as shown in the table. The value of each element is independent of the values of any other element in the table. Therefore, technicians in this field can understand that the value of each element in the table is an independent embodiment.

In an embodiment, the network device and the protocol agreement can determine the first identifier for each IMR in IMRs corresponding to all selection modes, and determine the second identifier for each IMR in IMRs corresponding to one selection mode. Therefore, when the terminal sends measurement results to the network device, it can choose whether to use the indication information sent to the network device to indicate the first identifiers or to include the second indication information used to indicate the second identifiers, as needed.

In addition, in an embodiment, in the case where the network device or protocol agreement determines the first identifier for each IMR in the IMRs corresponding to all selection modes, the network device or protocol agreement may determine the second identifier for each IMR in the IMRs corresponding to each selection mode in at least one specified selection mode.

For example, for the three selection modes in Table 2 above, the network device or protocol agreement can only determine the second identifier for each IMR in the IMRs corresponding to selection mode 3 (the terminal selects CSI-RS#2), while not determining the second identifier for each IMR in the IMRs corresponding to selection mode 2 (the terminal selects CSI-RS#1). Therefore, when selecting mode 2, the indication information sent by the terminal to the network device can only be used to indicate the first identifiers; when selecting mode 3, the terminal can send indication information to the network device indicating the first identifiers, or send indication information containing the first indication information and the second indication information to the network device, indicating the second identifiers through the second indication information.

In an embodiment, the interference when the terminal selects at least one CSI-RS resource in the plurality of CSI-RS resources includes at least one of:

interference from outside of the plurality of CSI-RS resources; or
interference from at least one CSI-RS resource not selected by the terminal from the plurality of CSI-RS resources.

In an embodiment, when the terminal selects at least one CSI-RS resource from multiple CSI-RS resources, it corresponds to at least one IMR. The measurement results obtained by the terminal on the at least one IMR can characterize the interference when the terminal selects at least one CSI-RS resource from multiple CSI-RS resources.

In an embodiment, the interference when the terminal selects at least one CSI-RS resource from multiple CSI-RS resources may include the interference from outside of the multiple CSI-RS resources.

For example, when the terminal selects at least one CSI-RS resource from two CSI-RS resources, as shown in Table 2, when the terminal selects CSI-RS#1 and CSI-RS#2, the corresponding IMR can be used to measure interference from outside of CSI-RS#1 and CSI-RS#2. Therefore, the measurement results measured on the IMR can characterize interference from outside of CSI-RS#1 and CSI-RS#2. When the terminal selects CSI-RS#1 or CSI-RS#2, the corresponding IMRs can also include the IMR used to measure interference from outside of CSI-RS#1 and CSI-RS#2. Therefore, the measurement results measured on the IMR can characterize interference from outside of CSI-RS#1 and CSI-RS#2.

In an embodiment, the interference when the terminal selects at least one CSI-RS resource in multiple CSI-RS resources may include interference from at least one CSI-RS resource not selected by the terminal in the multiple CSI-RS resources.

For example, when the terminal selects at least one CSI-RS resource from two CSI-RS resources, as shown in Table 2, when the terminal selects CSI-RS#1, the corresponding IMRs include the IMR used to measure interference from outside of CSI-RS#1. Therefore, the measurement results measured on the IMRs can characterize interference from outside of CSI-RS#1, such as interference from unselected CSI-RS#2. When the terminal selects CSI-RS#2, the corresponding IMRs include the IMR used to measure interference from outside of CSI-RS#2. Therefore, the measurement results taken on the IMRs can characterize interference from outside of CSI-RS#2, such as interference from unselected CSI-RS#1. It can be understood that the interference from CSI-RS#1 refers to the interference from the TRP corresponding to CSI-RS#1.

It should be noted that the interference involved in the above embodiments does not consider the interference from the CSI-RS resources selected by the terminal, and can be applied to scenarios where a single terminal performs Multiple Input Multiple Output (MIMO), where the CSI-RS resources selected by the terminal are only used by that terminal. The interference from the CSI-RS resources selected by the terminal is not considered. That is to say, the interference from TRPs corresponding to the CSI-RS resources selected by the terminal is not considered.

Moreover, considering the interference from CSI-RS selected by the terminal can be applied to scenarios where multiple terminals perform MIMO, where the CSI-RS resources selected by the terminal can not only be used by that terminal, but also by other terminals. The following are several examples to illustrate the scenario of considering the interference from CSI-RS selected by the terminal.

In an embodiment, the interference when the terminal selects at least one CSI-RS resource in multiple CSI-RS resources includes interference from the at least one CSI-RS resource selected by the terminal.

Since the interference when the terminal selects at least one CSI-RS resource in multiple CSI-RS resources includes the interference from the at least one CSI-RS resource selected by the terminal, each CSI-RS resource in the multiple CSI-RS resources may potentially cause interference, no matter which one CSI-RS resource or which several CSI-RS resources are selected from the multiple CSI-RS resources.

Therefore, the terminal needs to consider the same interference situation for each selection mode of CSI-RS resources from multiple CSI-RS resources, and the corresponding IMRs for each selection mode can also be the same. Common IMRs can be configured for all selection modes, or IMRs can be configured separately for each selection mode as needed.

The number of IMRs corresponding to each selection mode can be determined based on the number of multiple CSI-RS resources. For example, when the multiple CSI-RS resources consist of N CSI-RS resources, the number of IMRs corresponding to each selection mode is equal, which is $2^N$. That is, for each CSI-RS resource in the N CSI-RS resources, the IMRs may include or may not include the interference corresponding to that CSI-RS resource.

For example, when multiple CSI-RS resources consist of 2 CSI-RS resources, the number of IMRs corresponding to each of the 3 selection modes is equal, that is $2^2=4$, and the interference corresponding to IMRs corresponding to different selection modes is also the same. The four IMRs include: IMR corresponding to interference from outside of CSI-RS#1 and CSI-RS#2; IMR corresponding to interference from outside of CSI-RS#1; IMR corresponding to interference from outside of CSI-RS#2; IMR corresponding to interference including interference from CSI-RS#1 and CSI-RS#2, as well as interference from outside of CSI-RS#1 and CSI-RS#2.

If IMRs corresponding to different selection modes use different identifiers, then 3 selection modes correspond to $3 \times 4=12$ IMRs. When the indication information indicates the IMRs corresponding to the measurement results through the first identifiers, the size of the indication information can be 4 bits, used to indicate 1 to 12. However, if different selection modes correspond to the same IMRs, the indication information can directly indicate the IMRs corresponding to the measurement results through the second identifiers, and the size of the indication information can be 2 bits, used to indicate 1 to 4.

For example, when multiple CSI-RS resources consist of three CSI-RS resources, then for the seven selection modes, the number of IMRs corresponding to each selection mode is equal, that is, $2^3=8$, and the interference corresponding to IMRs for different selection modes is also the same. The 8 IMRs include: IMR corresponding to interference from outside of CSI-RS#1, CSI-RS#2, and CSI-RS#3; IMR corresponding to interference from outside of CSI-RS#1; IMR corresponding to interference from outside of CSI-RS#2; IMR corresponding to interference from outside of CSI-RS#3; IMR corresponding to interference from outside of CSI-RS#1 and CSI-RS#2; IMR corresponding to interference from outside of CSI-RS#1 and CSI-RS#3; IMR corresponding to interference from outside of CSI-RS#2 and CSI-RS#3; IMR corresponding to interference including interference from CSI-RS#1, CSI-RS#2, and CSI-RS#3, as well as interference from outside of CSI-RS#1, CSI-RS#2, and CSI-RS#3.

If different selection modes correspond to different IMRs using different identifiers, then 7 selection modes correspond to $7 \times 8=56$ IMRs. When the indication information indicates the IMRs corresponding to the measurement results through the first identifiers, the size of the indication information can be 6 bits, used to indicate 1 to 56. However, if different selection modes correspond to the same IMRs, the indication information can directly indicate the IMRs corresponding to the measurement results through the second identifiers, and the size of the indication information can be 3 bits, used to indicate 1 to 8.

For example, when multiple CSI-RS resources consist of 4 CSI-RS, then for the 15 selection modes, the number of IMRs corresponding to each selection mode is equal, that is $2^4=16$, and the interference corresponding to IMRs for different selection modes is also the same. The 16 IMRs include: IMR corresponding to interference from outside of CSI-RS#1, CSI-RS#2, CSI-RS#3, and CSI-RS#4; IMR corresponding to interference from outside of CSI-RS#1; IMR corresponding to interference from outside of CSI-RS#2; IMR corresponding to interference from outside of CSI-RS#3; IMR corresponding to interference from outside of CSI-RS#4; IMR corresponding to interference from outside of CSI-RS#1 and CSI-RS#2; IMR corresponding to interference from outside of CSI-RS#1 and CSI-RS#3; IMR corresponding to interference from outside of CSI-RS#1 and CSI-RS#4; IMR corresponding to interference from outside of CSI-RS#2 and CSI-RS#3; IMR corresponding to interference from outside of CSI-RS#2 and CSI-RS#4; IMR corresponding to interference from outside of CSI-RS#3 and CSI-RS#4; IMR corresponding to interference from outside of CSI-RS#1, CSI-RS#2, and CSI-RS#3; IMR corresponding to interference from outside of CSI-RS#1, CSI-RS#2, and CSI-RS#4; IMR corresponding to interference from outside of CSI-RS#1, CSI-RS#3, and CSI-RS#4; IMR corresponding to interference from outside of CSI-RS#2, CSI-RS#3, and CSI-RS#4; and IMR corresponding to interference including interference from CSI-RS#1, CSI-RS#2, CSI-RS#3, and CSI-RS#4, as well as interference from outside of CSI-RS#1, CSI-RS#2, CSI-RS#3, and CSI-RS#4.

If different selection modes correspond to different IMRs using different identifiers, then 15 selection modes correspond to 15 × 16=240 IMRs. When the indication information indicates the IMRs corresponding to the measurement results through the first identifiers, the size of the indication information can be 8 bits, used to indicate 1 to 240. However, if different selection modes correspond to the same IMRs, the indication information can directly indicate the IMRs corresponding to the measurement results through the second identifiers, and the size of the indication information can be 4 bits, used to indicate 1 to 15.

In an embodiment, the first part of CSI further includes at least one of:

channel state information reference signal indication (CRI);
broadband channel quality information (CQI);
indication of a number of non-zero broadband amplitude coefficients;
indication of a number of non-zero coefficients;
indication of positions of non-zero coefficients;
mode indication; or
rank indication (RI).

In an embodiment, the mode indication may be used to indicate CSI feedback mode, codebook mode, etc.

The CSI feedback mode can include Mode 1 and Mode 2, where Mode 1 is feedback based on a single TRP and Mode 2 is feedback based on multiple TRPs. Of course, the CSI feedback mode can also include other modes, which is not limited in this disclosure.

The codebook mode can include codebook structure 1 and codebook structure 2. Codebook structure 1 provides feedback on one piece of frequency domain basis (FD basis) information for all multiple CSI-RS; Codebook structure 2 provides feedback on one piece of frequency domain basis vector information for each of multiple CSI-RS. The codebook mode can also include other modes, which is not limited in this disclosure.

In an embodiment, the second part of CSI further includes at least one of:

spatial domain basis vector parameter information;
frequency domain basis vector parameter information;
indication of positions of non-zero coefficients;
phase coefficient information; or
amplitude coefficient information.

Fig. 3 is a schematic flowchart of an information receiving method illustrated according to an embodiment of the present disclosure. The information receiving method illustrated in this embodiment can be performed by a network device. The network device can communication with a terminal. The network device includes but is not limited to a network device in a communication systems such as 4G, 5G and 6G, such as a base station, a core network, etc. The terminal includes but is not limited to a phone, a tablet, a wearable device, a sensor, and an IoT device.

As shown in Fig. 3, the information receiving method may include the following steps.

In step S301, first configuration information is sent to a terminal, wherein the first configuration information is used to configure at least one interference measurement resource (IMR) for the terminal, the at least one IMR corresponds to a first channel state information reference signal (CSI-RS) resource set, and the first CSI-RS resource set comprises at least one CSI-RS resource selected by the terminal from a plurality of CSI-RS resources.

In step S302, indication information sent by the terminal is received, wherein the indication information indicates at least one CSI-RS resource and/or at least one IMR corresponding to at least one measurement result obtained by performing measurement based on at least one CSI-RS resource and/or at least one IMR.

It should be noted that the network device can select to execute step S302, or select to not execute step S302, after executing step S301.

In an embodiment, the network device can send the first configuration information to the terminal. The first configuration information is used to configure at least one IMR for the terminal. The at least one IMR corresponds to the first CSI-RS resource set, and the first CSI-RS resource set includes at least one CSI-RS resource selected by the terminal from a plurality of CSI-RS resources.

The terminal receives the first configuration information sent by the network device, and can determine at least one IMR according to the first configuration information. The at least one IMR corresponds to the first CSI-RS resource set, and the first CSI-RS resource set includes at least one CSI-RS resource selected by the terminal from a plurality of CSI-RS resources. The IMR can be used to measure interference when the terminal selects at least one CSI-RS resource from the plurality of CSI-RS resources.

In an embodiment, the at least one CSI-RS resource selected by the terminal from the plurality of CSI-RS resources can correspond to one IMR. In another embodiment, the at least one CSI-RS resource selected by the terminal from the plurality of CSI-RS resources can correspond to a plurality of IMRs. The correspondence relationship between at least one CSI-RS resource selected by the terminal from the plurality of CSI-RS resources and IMR will be illustrated in the subsequent embodiments, and will not be further elaborated here.

In an embodiment, the measurement result may include at least one of a first measurement result, a second measurement result, or a third measurement result. The following provide illustrative explanation of several kinds of measurement results.

In an embodiment, the terminal may perform measurement based on the at least one IMR.

For example, the terminal may perform measurements separately on each IMR in the at least one IMR, to obtain at least one first measurement result, in which one first measurement result corresponds to one IMR.

That is, the terminal performs measurement based on the at least one IMR, and the obtained measurement results may include measurement results corresponding to the at least one IMR respectively.

In an embodiment, the terminal may perform measurement based on the at least one CSI-RS resource selected from the plurality of CSI-RS resources.

For example, the terminal may perform measurement on the at least one CSI-RS resource selected from the plurality of CSI-RS resources, to obtain one second measurement result. This second measurement results corresponds to the at least one CSI-RS resource selected by the terminal from the plurality of CSI-RS resources.

For example, the terminal can determine the at least one IMR corresponding to selecting the at least one CSI-RS resource from the plurality of CSI-RS resources, and then perform measurements respectively on each IMR in the at least one IMR to obtain at least one first measurement result, in which one first measurement result corresponds to one IMR.

That is, the terminal performs measurement based on the at least one CSI-RS resource selected from the plurality of CSI-RS resources or the IMR, and the measurement result obtained may include the measurement result corresponding to the at least one CSI-RS resource or the measurement result corresponding to the IMR.

In an embodiment, the terminal may perform measurement based on the at least one CSI-RS resource selected from the plurality of CSI-RS resources and the at least one IMR, to obtain at least one measurement result.

For example, the terminal may perform measurements respectively on each IMR in the at least one IMR, to obtain the first measurement results corresponding to each IMR, and perform measurement on the at least one CSI-RS resource selected from the plurality of CSI-RS resources, to obtain the second measurement result corresponding to the at least one CSI-RS resource, and further obtain the third measurement result based on the first measurement results and the second measurement result.

In an embodiment, the measurement result, such as the first measurement result, the second measurement result, and the third measurement result, includes but is not limited to at least one of:

CQI (Channel Quality Information), PMI (Pre-coding Matrix Indication), RI (Rank Indication), LI (Layer Indication), magnitude coefficient, or phase coefficient.

In an embodiment, after obtaining the measurement result, the terminal can send the measurement result to the network device, and may also send indication information to the network device.

For example, the terminal performs measurement based on the at least one IMR, and the indication information may indicate the at least one IMR corresponding to the at least one measurement result.

For example, the terminal performs measurement based on the at least one CSI-RS resource selected from the plurality of CSI-RS resources, and the indication information may indicate the at least one CSI-RS resource selected from the plurality of CSI-RS resources corresponding to the at least one measurement result; after receiving the indication information, the network device can determine the at least one CSI-RS resource selected from the plurality of CSI-RS resources corresponding to the measurement results according to the indication information.

For example, the terminal performs measurement on the at least one CSI-RS resource selected from the plurality of CSI-RS resources and the at least one IMR, and the indication information may indicate the at least one CSI-RS resource selected from the plurality of CSI-RS resources corresponding to the at least one measurement result and the IMRs corresponding to selecting the at least one CSI-RS resource by the terminal from the plurality of CSI-RS resources. After receiving the indication information, the network device can determine according to the indication information, the at least one CSI-RS resource selected by the terminal from the plurality of CSI-RS resources corresponding to the at least one measurement result and the IMRs corresponding to selecting the at least one CSI-RS resource by the terminal from the plurality of CSI-RS resources.

According to embodiments of the present disclosure, the network device can send the first configuration information to the terminal, wherein the first configuration information is used to configure at least one IMR for the terminal, the at least one IMR corresponds to the first CSI-RS resource set, which includes at least one CSI-RS resource selected by the terminal from multiple CSI-RS resources. The terminal can determine at least one IMR based on the first configuration information, wherein the at least one IMR corresponds to the first CSI-RS resource set, which includes at least one CSI-RS resource selected by the terminal from multiple CSI-RS resources. Based on this, the IMR determined by the terminal can correspond to the first CSI-RS resource set, and one first CSI-RS resource set corresponds to one selection mode for CSI-RS resources. When the terminal has multiple selection modes for CSI-RS resources, multiple IMRs can be determined, rather than being limited to only one IMR.

One selection mode for CSI-RS resources can correspond to one or more IMRs, that is, when the terminal selects at least one CSI-RS resource from the plurality of CSI-RS resources, it can correspond to one or more IMRs.

The terminal can subsequently perform measurement based on the at least one CSI-RS resource and/or the at least one IMR to obtain at least one measurement result. Since the IMR corresponds to the at least one CSI-RS resource selected by the terminal, the measured result also corresponds to the at least one CSI-RS resource selected by the terminal, which is conducive to ensuring that the measurement results can accurately characterize the measurement results corresponding to at least one IMR when the terminal selects different CSI-RS resources.

Furthermore, the network device receives the indication information sent by the terminal, and can determine the at least one CSI-RS resource and/or the at least one IMR corresponding to the at least one measurement result according to the indication information, and the measurement results can accurately characterize the measurement results corresponding to at least one IMR when the terminal selects different CSI-RS resources.

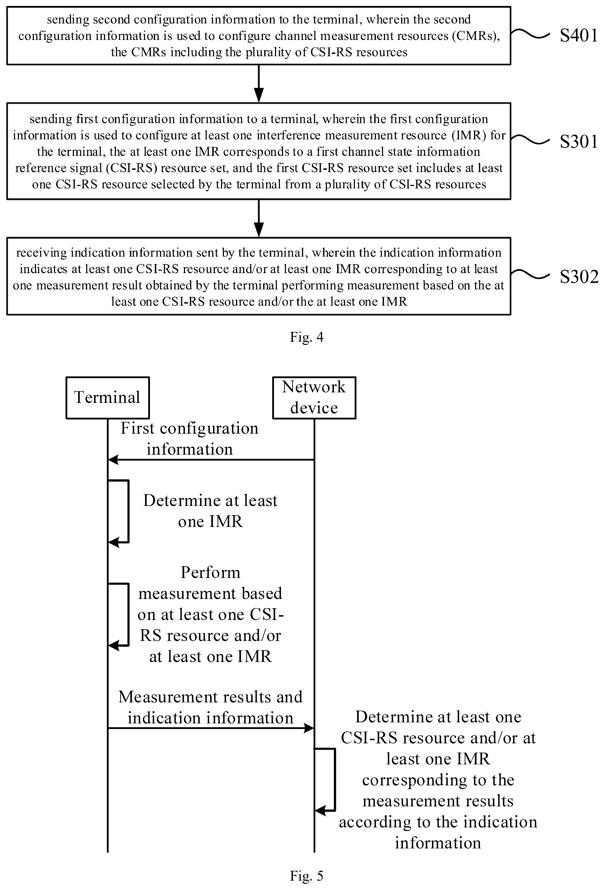

Fig. 4 is a schematic flowchart of another information receiving method illustrated according to an embodiment of the present disclosure. The method can be performed by the network device. As shown in Fig. 4, in an embodiment, the information receiving method further includes the following step.

In step S401, second configuration information is sent to the terminal, wherein the second configuration information is sued to configure channel measurement resources (CMRs), and the CMRs include the plurality of CSI-RS resources.

It should be noted that step S401 can be implemented independently, or in combination with any other embodiment disclosed in this disclosure. The specific implementation can be selected as needed, and is not limited in this disclosure.

In an embodiment, the network device can send the second configuration information to the terminal, and the second configuration information is used to configure CMRs for the terminal. The CMRs may include the plurality of CSI-RS resources. For example, the CMRs include N CSI-RS resources, where N can be set as needed. For example, N is less than a number of TRPs used by the network device to provide services to the terminal. For example, the number of TRPs used by the network device to provide services to the terminal is 4, and then N may be any value of 1, 2, 3 and 4.

The terminal receives the second configuration information sent by the network device, and can determine the CMRs according to the second configuration information, and the plurality of CSI-RS resources included in the CMRs. Subsequently, at least one CSI-RS resource can be selected from the plurality of CSI-RS resources included in the CMRs.

In an embodiment, the first configuration information and the second configuration information may be carried in the same configuration information. In another embodiment, the first configuration information and the second configuration information may be carried in different configuration information.

In an embodiment, the IMR may correspond to an identifier. For example, the network device configures multiple IMRs for the terminal through the first configuration information, and one IMR corresponding to one identifier. The correspondence relationship between the identifiers and the IMRs may be configured by the network device to the terminal, or may be determined by the terminal based on a protocol agreement. The terminal can determine the IMR corresponding to the identifier and the identifier corresponding to the IMR according to the correspondence relationship between the identifiers and the IMRs. The identifier may also be referred to as index, or number. The following embodiments illustrate the identifiers corresponding to the IMRs.

In an embodiment, the identifier corresponding to the IMR is a first identifier. The first identifier is configured to distinguish IMRs contained in a first set, and the IMRs in the first set include IMRs corresponding to a plurality of selection modes of the terminal for selecting CSI-RS resources in the plurality of CSI-RS resources. It can be understood that a plurality of CSI-RS resource sets can be determined according to these selection modes for selecting CSI-RS resources, in which each IMR in each selection mode corresponds to one first identifier. In an example, the first identifier may be understood as a global identifier, used to uniquely identify the IMR under a selection mode for selecting the CSI-RS resource set.

In an embodiment, when the terminal selects at least one CSI-RS resource in a plurality of CSI-RS resources, there may be multiple selection modes. Taking the plurality of CSI-RS resources being 2 CSI-RS resources as an example, these 2 CSI-RS resources being CSI-RS#1 and CSI-RS#2, when the terminal selects at least one CSI-RS resource from these 2 CSI-RS resources, there may be 3 selection modes:

Selection mode 1: the terminal selects CSI-RS#1 and CSI-RS#2;
Selection mode 2: the terminal selects CSI-RS#1;
Selection mode 3: the terminal selects CSI-RS#2.

One selection mode may correspond to one or more IMRs. For example, selection mode 1 corresponds to 1 IMR, and the 1 IMR corresponding to selection mode 1 is used to measure interference from outside of CSI-RS#1 and CSI-RS#2; selection mode 2 corresponds to 2 IMRs, one IMR is used to measure interference from outside of CSI-RS#1 and CSI-RS#2, and the other IMR is used to measure interference from outside of CSI-RS#1; selection mode 3 corresponds to 2 IMRs, one IMR is used to measure interference from outside of CSI-RS#1 and CSI-RS#2, and the other IMR is used to measure interference from outside of CSI-RS#2.

The IMRs in the first set include IMRs corresponding to multiple selection modes of the terminal for selecting CSI-RS resources in the plurality of CSI-RS resources. For example, the IMRs in the first set include IMRs corresponding to three selection modes of the terminal for selecting CSI-RS resources in the above 2 CSI-RS resources, that is, 5 IMRs.

The network device or the protocol agreement can determine the first identifier for each IMR in the IMRs corresponding to the multiple selection modes. For example, the above three selection modes correspond to 5 IMRs, and then the first identifier can be determined for each IMR in the 5 IMRs, and the identifiers of the IMRs may be 1 to 5. The network device can determine the IMR corresponding to the measurement result sent by the terminal according to the first identifier.

For example, the identifier of the one IMR#1 corresponding to selection mode 1 is 1; the identifier of IMR#2 for measuring interference from outside of CSI-RS#1 and CSI-RS#2 corresponding to selection mode 2 is 2; the identifier of IMR#3 for measuring interference from outside of CSI-RS#1 corresponding to selection mode 2 is 3; the identifier of IMR#4 for measuring interference from outside of CSI-RS#1 and CSI-RS#2 corresponding to selection mode 3 is 4; and the identifier of IMR#5 for measuring interference from outside of CSI-RS#2 corresponding to selection mode 3 is 5. For example, if the first identifier in the indication information received by the network device is 5, the network device can determine the measurement result sent by the terminal is corresponding to IMR#5.

In an embodiment, taking the plurality of CSI-RS resources being N CSI-RS resources as example, the number of selection modes of the terminal for selecting CSI-RS resources in the N CSI-RS resources can be determined based on the following formula:

$$C_N^N + C_N^{N-1} + \cdots + C_N^{N-i} + \cdots + C \ ;$$

when the selection mode is selecting N-i CSI-RS resources in the N CSI-RS resources, the number of corresponding IMRs can be determined based on the following formula:

$$C_N^{N-i} \cdot 2^i ;$$

where, $C_N^{N-i}$ represents the number of selection modes for selecting N-i CSI-RS resources in the N CSI-RS resources, N is a positive integer greater than or equal to 2, and i is a positive integer greater than or equal to 1 and less than and equal to N.

Based on the above formulas, for example, when N=2, the number of selection modes for selecting CSI-RS resources in the 2 CSI-RS resources is 3. The total number of IMRs corresponding to these 3 selection modes for CSI-RS resources is 5, and the identifier is determined for each IMR in the 5 IMRs, and the first identifiers of the IMRs may be 1 to 5.

For example, when N=3, the number of selection modes for selecting CSI-RS resources in the 3 CSI-RS resources is 7. The total number of IMRs corresponding to these 7 selection modes for CSI-RS resources is 19, and the identifier is determined for each IMR in the 19 IMRs, and the first identifiers of the IMRs may be 1 to 19.

For example, when N=4, the number of selection modes for selecting CSI-RS resources in the 4 CSI-RS resources is 15. The total number of IMRs corresponding to these 15 selection modes for CSI-RS resources is 65, and the identifier is determined for each IMR in the 65 IMRs, and the first identifiers of the IMRs may be 1 to 65.

It should be noted that, the interference corresponding to multiple IMRs corresponding to multiple selection modes may be the same. For example, for two IMRs with the same corresponding interference, although the interference corresponding to these two IMRs is the same, the selection modes of the CSI-RS resources corresponding to these two IMRs may be different, so the two IMRs correspond to different identifiers. For example, when N=3, there may be two IMRs with the same interference in the 19 IMRs, but due to the different selection modes of CSI-RS resources corresponding to the two IMRs, the two IMRs correspond to different identifiers.

Since the first identifier is used to distinguish the IMR contained in the first set, which includes the IMRs corresponding to multiple selection modes of the terminal for selecting CSI-RS resources in the plurality of CSI-RS resources, the first identifier can also be referred to as the global identifier of the IMR.

In an embodiment, the indication information is used to indicate the first identifier of the IMR corresponding to the measurement result.

The terminal sends the indication information to the network device, indicating the first identifier of the IMR corresponding to the measurement result. The network device can determine the first identifier of the IMR corresponding to the received measurement result based on the indication information, and then determine the IMR corresponding to the first identifier based on the correspondence between the identifier and the IMR, that is, the IMR corresponding to the received measurement result.

Taking the terminal selecting at least one CSI-RS resource from two CSI-RS resources as an example, based on the previous example, it can be seen that there are a total of five IMRs in this case, with identifiers ranging from 1 to 5.

For example, the terminal sends a measurement result corresponding to an IMR to the network device, and the first identifier indicated by the indication information is 3.

The network device can determine the IMR corresponding to the received measurement result as IMR#3 based on the first indication information, and the measurement result can characterize interference from outside of CSI-RS#1.

For example, the terminal sends measurement results corresponding to two IMRs to the network device, namely measurement result#1 and measurement result#2, with the first identifiers indicated by the indication information being 4 and 5.

After receiving the measurement results and indication information, the network device can determine that the first identifier corresponding to measurement result#1 is 4 and the first identifier corresponding to measurement result#2 is 5 based on the measurement results and the relationship between the first identifier and the IMR. Furthermore, based on the first identifier 4, it can be determined that measurement result#1 corresponds to IMR#4, which is used to characterize interference from outside of CSI-RS# 1 and CSI-RS#2; and based on the first identifier 5, it can be determined measurement result#2 as the measurement result corresponding to IMR#5, which is used to characterize interference from outside of CSI-RS#2.

It should be noted that the correspondence relationship between the IMR and the first identifier may be indicated by the network device to the terminal in advance, or may be specified in the protocol.

In an embodiment, the indication information is carried in a first part (part I) of CSI, or carried in a second part (part II) of CSI. A size of the first part of CSI is fixed. The size refers to the number of bits occupied.

Due to the fact that when indicating the first identifier in the indication information, the first identifier is the identifier of the IMR in the IMRs corresponding to all the selection modes of the terminal for selecting CSI-RS resources in the plurality of CSI-RS resources, and the total number of IMRs corresponding to all the selection modes is fixed, the maximum value of the first identifier is fixed. Therefore, the size of the indication information used to indicate the first identifier can also be fixed, and the size of the first part of the CSI carrying the indication information can also be fixed.

For example, when the terminal selects at least one CSI-RS resource from two CSI-RS resources, and the maximum first identifier is 5, the size of the indication information can be 3 bits. For example, when the terminal selects at least one CSI-RS resource from three CSI-RS resources, the maximum first identifier is 19, and the size of the indication information can be 5 bits. For example, when the terminal selects at least one CSI-RS resource from four CSI-RS resources, the maximum first identifier is 65, and the size of the indication information can be 7 bits.

In an embodiment, the identifier corresponding to the IMR includes a second identifier, which is used to distinguish the IMRs contained in the second set. The IMRs contained in the second set include the IMRs corresponding to one selection mode of the terminal for selecting CSI-RS resources in the multiple CSI-RS resources. It can be understood that multiple sets of CSI-RS resources can be determined based on the selection modes of these multiple CSI-RS resources, where each selection mode corresponds to one or more IMRs, which are numbered independently. In an example, the second identifier can be understood as a local identifier used to uniquely identify the identifier of each IMR under a selection mode of a set of CSI-RS resources.

When the terminal selects at least one CSI-RS resource from the plurality of CSI-RS resources, there may be multiple selection modes. Taking the plurality of CSI-RS resources being 2 CSI-RS resources as an example, the 2 CSI-RS resources being CSI-RS#1 and CSI-RS#2, when the terminal selects at least one CSI-RS resource in the 2 CSI-RS resources, there may be 3 selection modes:

Selection mode 1: the terminal selects CSI-RS#1 and CSI-RS#2;
Selection mode 2: the terminal selects CSI-RS#1;
Selection mode 3: the terminal selects CSI-RS#2.

One selection mode can correspond to one or more IMRs. For example, selection mode 1 corresponds to 1 IMR, and the 1 IMR corresponding to selection mode 1 is used to measure interference from outside of CSI-RS#1 and CSI-RS#2; selection mode 2 corresponds to 2 IMRs, one IMR is used to measure interference from outside of CSI-RS#1 and CSI-RS#2, and the other IMR is used to measure interference from outside of CSI-RS#1; selection mode 3 corresponds to 2 IMRs, one IMR is used to measure interference from outside of CSI-RS#1 and CSI-RS#2, and the other IMR is used to measure interference from outside of CSI-RS#2.

The IMRs in the second set include the IMRs corresponding to one selection mode of the terminal for selecting CSI-RS resources in the plurality of CSI-RS resources. The number of second sets is equal to the number of selection modes.

For example, when N=2, there are three selection modes, so there can be three second sets: second set#1, second set#2, and second set#3. The IMRs in the second set#1 include the corresponding IMRs when the terminal selects CSI-RS#1 and CSI-RS#2 from 2 CSI-RS resources, that is, 1 IMR; the IMRs in the second set#2 include the corresponding IMRs when the terminal selects CSI-RS#1 from 2 CSI-RS resources, that is, 2 IMRs; The IMRs in the second set#3 include the corresponding IMRs when the terminal selects CSI-RS#2 from 2 CSI-RS resources, that is, 3 IMRs.

The network device or protocol agreement can determine a second identifier for each IMR in the IMRs corresponding to one selection mode. When the selection mode corresponds to only one IMR, the IMR corresponding to this selection mode is fixed, and the IMR can be determined based on the selection mode. Therefore, it is not necessary to determine a second identifier for the IMR corresponding to this selection mode, and the indication information can only be used to indicate the at least one CSI-RS resource selected by the terminal from the plurality of CSI-RS resources. Of course, a second identifier can also be determined for the IMR corresponding to this selection mode, but since this selection mode only corresponds to one IMR, then it only corresponds to the second identifier of one IMR. The network device can determine the IMR corresponding to the measurement result sent by the terminal according to the second identifier.

For example, if one IMR#1 corresponds to selection mode 1, then the IMR corresponding to this selection model is fixed and there is no need to set a second identifier for the IMR. The second identifier for IMR#2 used to measure interference from outside of CSI-RS#1 and CSI-RS#2 corresponding to selection mode 2 is 1; the second identifier for IMR#3 used to measure interference from outside of CSI-RS#1 corresponding to selection mode 2 is 2. The second identifier for IMR#4 used to measure interference from outside of CSI-RS#1 and CSI-RS#2 corresponding to selection mode 3 is 1; the second identifier for IMR#5 used to measure interference from outside of CSI-RS#2 corresponding to selection mode 3 is 2. For example, if the network device determines that the terminal selects CSI-RS#1 from two CSI-RS resources based on the received indication information, and the second identifier is 1, then the network device can determine the IMR with the identifier of 1 corresponding to the measurement result sent by the terminal when the terminal selects CSI-RS#1 from the two CSI-RS resources, that is, IMR#2.

In an embodiment, the indication information includes first indication information and/or second indication information, wherein the first indication information indicates the at least one CSI-RS resource selected by the terminal in the plurality of CSI-RS resources, and the second indication information indicates the second identifier of the IMR corresponding to the measurement result.

Since the second identifier is the identifier of the IMR in the IMRs corresponding to a selection mode of the terminal for selecting CSI-RS resources in the plurality of CSI-RS resources, the second identifier of the IMR may be different in the IMRs corresponding to the same selection mode, but the second identifier of the IMR may be the same in the IMRs corresponding to different selection modes. For example, IMR#3 corresponding to the above selection mode 2 and IMR#4 corresponding to the selection mode 3 have the same second identifier, both of which are 1.

Therefore, in order to ensure that the network device accurately distinguish the IMR based on the second identifier, the indication information sent by the terminal to the network device may include the first indication information and the second indication information. The first indication information is used to indicate the at least one CSI-RS resource selected by the terminal from multiple CSI-RS resources, that is, to indicate the selection mode of the terminal for selecting CSI-RS resources. The second indication information is used to indicate the second identifier of the IMR corresponding to the measurement result sent to the network device.

The network device can determine the selection mode of the terminal for selecting CSI-RS resources based on the first indication information, and can determine the second identifier of the IMR corresponding to the received measurement result based on the second indication information, thereby accurately determining the IMR corresponding to the measurement result.

Take selecting at least one CSI-RS resource by the terminal in 2 CSI-RS resources as an example.

For example, the terminal sends the measurement result corresponding to one IMR to the network device. The first indication information is used to indicate that the terminal has selected CSI-RS#1 in the 2 CSI-RS resources, and the second indication information is used to indicate that the second identifier is 1.

Based on the first indication information and the second indication information, the network device can determine that the IMR corresponding to the measurement result is the IMR with the second identifier of 1 when the terminal selects CSI-RS#1 from the two CSI-RS resources, that is, IMR#2.

For example, the terminal sends measurement results corresponding to two IMRs to the network device, namely measurement result#1 and measurement result#2. The first indication information is used to indicate that the terminal has selected CSI-RS#2 in the three CSI-RS. The second indication information is used to indicate that the second identifiers are 1 and 2.

After receiving the measurement results and the indication information, the network device can determine that the second identifier corresponding to measurement result#1 is 1 and the second identifier corresponding to measurement result#2 is 2 based on the relationship between the measurement results and the second identifiers corresponding to IMRs. Furthermore, based on the first indication information and the second indication information, it can be determined that measurement result#1 is corresponding to the IMR with the second identifier of 1 when the terminal selects CSI-RS#2 in the 2 CSI-RS resources, that is, IMR#4; and measurement result#2 is corresponding to the IMR with the second identifier of 2 when the terminal selects CSI-RS#2 in the 2 CSI-RS resources, i.e. IMR#5.

It should be noted that the relationship between IMR and the second identifier can be indicated to the terminal in advance by the network device, or can be specified in the protocol.

Since the second identifier is the identifier of the IMR in the IMRs corresponding to one selection mode of the terminal for selecting CSI-RS resources in multiple CSI-RS resources, the second identifier can also be referred to as the local identifier of the IMR.

In an embodiment, the indication information sent by the terminal to the network device may also include only the first indication information and not the second indication information.

For example, when the selection mode corresponds to only one IMR, the IMR corresponding to the selection mode is fixed. The terminal can ensure that the network device can accurately determine the IMR corresponding to the measurement result by indicating the selection mode through the first indication information, without having to send the second indication information. This is conducive to saving communication resources. In this case, the indication information sent by the terminal to the network device is only used to indicate the at least one CSI-RS resource selected by the terminal from the plurality of CSI-RS resources.

It should be noted that when the identifier corresponding to IMR is the first identifier, the terminal can also send indication information to the network device indicating the CSI-RS resources selected by the terminal in the plurality of CSI-RS resources, so that the network device can determine the CSI-RS resources selected by the terminal in the plurality of CSI-RS resources.

In an embodiment, the first indication information is carried in the first part (part I) of CSI, and the second indication information is carried in the first part (part I) or the second part (part II) of CSI. The size of the first part of CSI is fixed, and the size of the second part of CSI is fixed or variable.

In an embodiment, the first indication information is used to indicate at least one CSI-RS resource selected by the terminal in the plurality of CSI-RS resources, that is, to indicate the selection mode of the terminal for selecting CSI-RS resources in the plurality of CSI-RS resources, and in the case where the plurality of CSI-RS resources have been determined, the number of the plurality of CSI-RS resources is fixed, and the number of selection modes for CSI-RS resources in the plurality of CSI-RS resources is fixed. Therefore, the size of the first indication information that can be used to indicate the selection mode can be fixed, and the size of the first part of CSI carrying the first indication information can also be fixed.

For example, when the plurality of CSI-RS resources consist of 2 CSI-RS resources, the size of the first indication information can be 2 bits, and 2 bits correspond to the selection in 2 CSI-RS resources; when the plurality of CSI-RS resources consist of 3 CSI-RS resources, the size of the first indication information can be 3 bits, and 3 bits correspond to the selection in 3 CSI-RS resources; when the plurality of CSI-RS resources consist of 4 CSI-RS resources, the size of the first indication information can be 4 bits, and 4 bits correspond to the selection in 4 CSI-RS resources.

In an embodiment, when the second indication information is carried in the first part of the CSI, due to the fixed size of the first part of the CSI, in order to ensure that the second indication information can indicate the second identifiers of the IMRs corresponding to each selection mode, the number of IMRs corresponding to each selection mode can be determined, and then the size of the second indication information can be determined based on the maximum number of IMRs.

For example, taking the terminal selecting at least one CSI-RS resource from 4 CSI-RS resources as an example, there are 15 selection modes. When the selection mode is to select N-i CSI-RS resources from N CSI-RS resources, the corresponding number of IMRs can be determined based on the previous formula $2^i$. The number of IMRs corresponding to each selection mode can be determined as 1, 2, 4, and 8, respectively. The maximum number of IMRs is 8. Therefore, the size of the second indication information can be determined based on 8, for example, the size is 3 bits.

In an embodiment, when the second indication information is carried in the second part of CSI, the size of the second indication information may vary based on the number of IMRs corresponding to the selection mode, as the terminal may select different CSI-RS resources in the plurality of CSI-RS resources, and the size of the second part of CSI carrying the second indication information may also vary.

Take selecting at least one CSI-RS resource by the terminal in 4 CSI-RS resources as an example.

When the terminal selects 3 CSI-RS resources in the 4 CSI-RS resources, for example, CSI-RS#1 is not selected, and CSI-RS#2, CSI-RS#3, and CSI-RS#4 are selected, it is corresponding to 2 IMRs, where the first IMR corresponds to interference from outside of the 4 CSI-RS resources, and the second IMR corresponds to interference from outside of CSI-RS#2, CSI-RS#3, and CSI-RS#4. Therefore, the size of the second indication information can be 1 bit, which can indicate the second identifiers of 2 IMRs.

When the terminal selects 2 CSI-RS resources in the 4 CSI-RS resources, for example, CSI-RS#1 and CSI-RS#2 are not selected, and CSI-RS#3 and CSI-RS#4 are selected, it is corresponding to 4 IMRs, where the first IMR corresponds to interference from outside of the 4 CSI-RS resources, the second IMR corresponds to interference from outside of CSI-RS#3 and CSI-RS#4, the third IMR corresponds to interference from outside of CSI-RS#3, CSI-RS#4 and CSI-RS#1, and the fourth IMR corresponds to interference from outside of CSI-RS#3, CSI-RS#4 and CSI-RS#2. Therefore, the size of the second indication information can be 2 bits, which can indicate the second identifiers of 4 IMRs.

When the terminal selects 1 CSI-RS resources in the 4 CSI-RS resources, for example, CSI-RS#1 is selected, and CSI-RS#2, CSI-RS#3 and CSI-RS#4 are not selected, it is corresponding to 8 IMRs, where the first IMR corresponds to interference from outside of the 4 CSI-RS resources, the second IMR corresponds to interference from outside of CSI-RS#1, the third IMR corresponds to interference from outside of CSI-RS#1 and CSI-RS#2, the fourth IMR corresponds to interference from outside of CSI-RS#1 and CSI-RS#3, the fifth IMR corresponds to interference from outside of CSI-RS#1 and CSI-RS#4, the sixth IMR corresponds to interference from outside of CSI-RS#1, CSI-RS#2 and CSI-RS#3, the seventh IMR corresponds to interference from outside of CSI-RS#1, CSI-RS#2 and CSI-RS#4, and the eighth IMR corresponds to interference from outside of CSI-RS#1, CSI-RS#3 and CSI-RS#4. Therefore, the size of the second indication information can be 3 bits, which can indicate the second identifiers of 8 IMRs.

The following illustrates the first identifier and the second identifier through several tables. Table 1 described above shows the identifiers of the corresponding IMRs when the terminal selects at least one CSI-RS resource from two CSI-RS resources.

As shown in Table 1, when the terminal selects at least one CSI-RS resource from 2 CSI-RS resources, there may be 3 selection modes.

When the terminal selects CSI-RS#1 and CSI-RS#2, it is corresponding to one IMR. The first identifier of the IMR may be 1. Since one IMR is corresponding to selecting CSI-RS#1 and CSI-RS#2, that is, the IMR corresponding to selecting CSI-RS#1 and CSI-RS#2 is fixed, the network device only needs to determine that the selection mode is to select CSI-RS#1 and CSI-RS#2, and then then can accurately determine the IMR corresponding to the selection mode, so there is no need to set the second identifier.

When the terminal selects CSI-RS#1, it corresponds to 2 IMRs; when the terminal selects CSI-RS#2, it corresponds to 2 IMRs. When CSI-RS#1 is selected, the first identifiers of the two IMRs corresponding to it can be 2 and 3, and the second identifiers of the two IMRs can be 1 and 2. When CSI-RS#2 is selected, the first identifiers for the two IMRs corresponding to it can be 4 and 5, and the second identifiers for the two IMRs corresponding to it can be 1 and 2.

When the indication information sent by the terminal to the network device is used to indicate the first identifiers, the size of the indication information can be 3 bits and can be used to indicate the first identifiers 1 to 5. The network device can determine the IMRs corresponding to the measurement results according to the first identifiers.

When the indication information sent by the terminal to the network device includes the first indication information and the second indication information, the size of the first indication information can be 2 bits, used to indicate the terminal's selection in 2 CSI-RS resources; the size of the second indication information can be 1 bit, used to indicate the second identifiers 1 and 2. The network device can determine the IMRs corresponding to the measurement results according to the first indication information and the second identifiers.

Table 2 described above shows the identifiers of the corresponding IMRs when the terminal selects at least one CSI-RS resource from three CSI-RS resources (CSI-RS#1, CSI-RS#2, and CSI-RS#3).

As shown in Table 2, when the terminal selects at least one CSI-RS in three CSI-RS resources, there may be seven selection modes.

When the terminal selects CSI-RS#1, CSI-RS#2, and CSI-RS#3, it is corresponding to one IMR. The first identifier of the IMR can be 1. However, since one IMR is corresponding to selecting CSI-RS#1, CSI-RS#2, and CSI-RS#3, that is, the IMR corresponding to selecting CSI-RS#1, CSI-RS#2, and CSI-RS#3 is fixed, the network device only needs to determine that the selection mode is selecting CSI-RS#1, CSI-RS#2, and CSI-RS#3, and then can accurately determine the IMR corresponding to the selection mode, so there is no need to set the second identifier.

When the terminal selects CSI-RS#2 and CSI-RS#3, it is corresponding to two IMRs, where the first identifiers of the two IMRs can be 2 and 3, and the second identifiers of the two IMRs can be 1 and 2. The situation where the terminal selects any two CSI-RS resources is similar and will not be repeated here.

When the terminal selects CSI-RS#1, it corresponds to 4 IMRs, where the first identifiers of the 4 IMRs can be 8, 9, 10, 11, and the second identifiers of the 4 IMRs can be 1, 2, 3, 4. The situation where the terminal selects any one of the CSI-RS resources is similar and will not be repeated here.

When the indication information sent by the terminal to the network device is used to indicate the first identifiers, the size of the indication information can be 5 bits, which can be used to indicate the first identifiers 1 to 19. The network device can determine the IMRs corresponding to the measurement results based on the first identifiers.

When the indication information sent by the terminal to the network device includes the first indication information and the second indication information, the size of the first indication information can be 3 bits, used to indicate the terminal's selection in 3 CSI-RS resources. When the size of the second indication information is fixed, it can be 2 bits, used to indicate the second identifiers 1 to 4. When the size of the second indication information is variable, it can be 1 bit or 2 bits, where 1 bit is used to indicate the second identifiers 1 to 2, and 2 bits are used to indicate the second identifiers 1 to 4. The network device can determine the IMRs corresponding to the measurement results based on the first indication and the second identifiers.

Table 3 described above shows the identifiers of the corresponding IMRs when the terminal selects at least one CSI-RS resource in four CSI-RS resources.

As shown in Table 3, when the terminal selects at least one CSI-RS in four CSI-RS resources, there may be 15 selection modes.

When the terminal selects CSI-RS#1, CSI-RS#2, CSI-RS#3 and CSI-RS#4, it corresponds to one IMR. The first identifier of the IMR can be 1. Since one IMR is corresponding to selecting CSI-RS#1, CSI-RS#2, CSI-RS#3, and CSI-RS#4, that is, the IMR is fixed when selecting CSI-RS#1, CSI-RS#2, CSI-RS#3, and CSI-RS#4, it is only necessary to determine the selection mode as selecting CSI-RS#1, CSI-RS#2, CSI-RS#3, and CSI-RS#4, and then the IMR corresponding to the selection mode can be accurately determined, so there is no need to set the second identifier.

When the terminal selects CSI-RS#2, CSI-RS#3 and CSI-RS#4, it corresponds to 2 IMRS, where the first identifiers of the 2 IMRs can be 2 and 3, and the second identifiers of the 2 IMRs can be 1 and 2. The situation where the terminal selects any other three CSI-RS resources is similar and will not be repeated here.

When the terminal selects CSI-RS#3 and CSI-RS#4, it corresponds to 4 IMRs, where the first identifiers of the 4 IMRs can be 10, 11, 12 and 13, and the second identifiers of the 4 IMRs can be 1, 2, 3 and 4. The situation where the terminal selects any other two CSI-RS resources is similar and will not be repeated here.

When the terminal selects CSI-RS#1, it corresponds to 8 IMRs, where the first identifiers of the 8 IMRs can be 34, 35, 36, 37, 38, 39, 40 and 41, and the second identifiers of the 8 IMRs can be 1, 2, 3, 4, 5, 6, 7 and 8. The situation where the terminal selects any other CSI-RS resource is similar and will not be repeated here.

When the indication information sent by the terminal to the network device is used to indicate the first identifiers, the size of the indication information can be 7 bits, used to indicate the first identifiers 1 to 65. The network device can determine the IMRs corresponding to the received measurement results according to the first identifiers.

When the indication information sent by the terminal to the network device include the first indication information and the second indication information, the size of the first indication information can be 4 bits, used to indicate the terminal's selection in the 4 CSI-RS resources. When the size of the second indication information is fixed, it can be 3 bits, used to indicate the second identifiers 1 to 8. When the size of the second indication information is variable, it can be 1 bit, 2 bits or 3 bits, where 1 bit is used to indicate the second identifiers 1 and 2, 2 bits are used to indicate the second identifiers 1 to 4, and 3 bits are used to indicate the second identifiers 1 to 8. The network device can determine the IMRs corresponding to the received measurement results according to the first indication information and the second identifiers.

In an embodiment, the network device and the protocol agreement can determine the first identifier for each IMR in IMRs corresponding to all selection modes, and determine the second identifier for each IMR in IMRs corresponding to one selection mode. Therefore, when the terminal sends measurement results to the network device, it can choose whether to use the indication information sent to the network device to indicate the first identifiers or to include the second indication information used to indicate the second identifiers, as needed.

In addition, in an embodiment, in the case where the network device or protocol agreement determines the first identifier for each IMR in the IMRs corresponding to all selection modes, the network device or protocol agreement may determine the second identifier for each IMR in the IMRs corresponding to each selection mode in at least one specified selection mode.

For example, for the three selection modes in Table 2 above, the network device or protocol agreement can only determine the second identifier for each IMR in the IMRs corresponding to selection mode 3 (the terminal selects CSI-RS#2), while not determining the second identifier for each IMR in the IMRs corresponding to selection mode 2 (the terminal selects CSI-RS#1). Therefore, when selecting mode 2, the indication information sent by the terminal to the network device can only be used to indicate the first identifiers; when selecting mode 3, the terminal can send indication information to the network device indicating the first identifiers, or send indication information containing the first indication information and the second indication information to the network device, indicating the second identifiers through the second indication information.

In an embodiment, the interference when the terminal selects at least one CSI-RS resource in the plurality of CSI-RS resources includes at least one of:

interference from outside of the plurality of CSI-RS resources; or
interference from at least one CSI-RS resource not selected by the terminal from the plurality of CSI-RS resources.

In an embodiment, when the terminal selects at least one CSI-RS resource from multiple CSI-RS resources, it corresponds to at least one IMR. The measurement results obtained by the terminal on the at least one IMR can characterize the interference when the terminal selects at least one CSI-RS resource from multiple CSI-RS resources.

In an embodiment, the interference when the terminal selects at least one CSI-RS resource from multiple CSI-RS resources may include the interference from outside of the multiple CSI-RS resources.

For example, when the terminal selects at least one CSI-RS resource from two CSI-RS resources, as shown in Table 2, when the terminal selects CSI-RS#1 and CSI-RS#2, the corresponding IMR can be used to measure interference from outside of CSI-RS#1 and CSI-RS#2. Therefore, the measurement results measured on the IMR can characterize interference from outside of CSI-RS#1 and CSI-RS#2. When the terminal selects CSI-RS#1 or CSI-RS#2, the corresponding IMRs can also include the IMR used to measure interference from outside of CSI-RS#1 and CSI-RS#2. Therefore, the measurement results measured on the IMR can characterize interference from outside of CSI-RS#1 and CSI-RS#2.

In an embodiment, the interference when the terminal selects at least one CSI-RS resource in multiple CSI-RS resources may include interference from at least one CSI-RS resource not selected by the terminal in the multiple CSI-RS resources.

For example, when the terminal selects at least one CSI-RS resource from two CSI-RS resources, as shown in Table 2, when the terminal selects CSI-RS#1, the corresponding IMRs include the IMR used to measure interference from outside of CSI-RS#1. Therefore, the measurement results measured on the IMRs can characterize interference from outside of CSI-RS#1, such as interference from unselected CSI-RS#2. When the terminal selects CSI-RS#2, the corresponding IMRs include the IMR used to measure interference from outside of CSI-RS#2. Therefore, the measurement results taken on the IMRs can characterize interference from outside of CSI-RS#2, such as interference from unselected CSI-RS#1. It can be understood that the interference from CSI-RS#1 refers to the interference from the TRP corresponding to CSI-RS#1.

It should be noted that the interference involved in the above embodiments does not consider the interference from the CSI-RS resources selected by the terminal, and can be applied to scenarios where a single terminal performs Multiple Input Multiple Output (MIMO), where the CSI-RS resources selected by the terminal are only used by that terminal. The interference from the CSI-RS resources selected by the terminal is not considered. That is to say, the interference from TRPs corresponding to the CSI-RS resources selected by the terminal is not considered.

Moreover, considering the interference from CSI-RS selected by the terminal can be applied to scenarios where multiple terminals perform MIMO, where the CSI-RS resources selected by the terminal can not only be used by that terminal, but also by other terminals. The following are several examples to illustrate the scenario of considering the interference from CSI-RS selected by the terminal.

In an embodiment, the interference when the terminal selects at least one CSI-RS resource in multiple CSI-RS resources includes interference from the at least one CSI-RS resource selected by the terminal.

Since the interference when the terminal selects at least one CSI-RS resource in multiple CSI-RS resources includes the interference from the at least one CSI-RS resource selected by the terminal, each CSI-RS resource in the multiple CSI-RS resources may potentially cause interference, no matter which one CSI-RS resource or which several CSI-RS resources are selected from the multiple CSI-RS resources.

Therefore, the terminal needs to consider the same interference situation for each selection mode of CSI-RS resources from multiple CSI-RS resources, and the corresponding IMRs for each selection mode can also be the same. Common IMRs can be configured for all selection modes, or IMRs can be configured separately for each selection mode as needed.

The number of IMRs corresponding to each selection mode can be determined based on the number of multiple CSI-RS resources. For example, when the multiple CSI-RS resources consist of N CSI-RS resources, the number of IMRs corresponding to each selection mode is equal, which is $2^N$. That is, for each CSI-RS resource in the N CSI-RS resources, the IMRs may include or may not include the interference corresponding to that CSI-RS resource.

For example, when multiple CSI-RS resources consist of 2 CSI-RS resources, the number of IMRs corresponding to each of the 3 selection modes is equal, that is $2^2=4$, and the interference corresponding to IMRs corresponding to different selection modes is also the same. The four IMRs include: IMR corresponding to interference from outside of CSI-RS#1 and CSI-RS#2; IMR corresponding to interference from outside of CSI-RS#1; IMR corresponding to interference from outside of CSI-RS#2; IMR corresponding to interference including interference from CSI-RS#1 and CSI-RS#2, as well as interference from outside of CSI-RS#1 and CSI-RS#2.

If IMRs corresponding to different selection modes use different identifiers, then 3 selection modes correspond to $3 \times 4=12$ IMRs. When the indication information indicates the IMRs corresponding to the measurement results through the first identifiers, the size of the indication information can be 4 bits, used to indicate 1 to 12. However, if different selection modes correspond to the same IMRs, the indication information can directly indicate the IMRs corresponding to the measurement results through the second identifiers, and the size of the indication information can be 2 bits, used to indicate 1 to 4. The network device can determine the IMRs corresponding to the received measurement results according to the first indication information and the second identifiers.

For example, when multiple CSI-RS resources consist of three CSI-RS resources, then for the seven selection modes, the number of IMRs corresponding to each selection mode is equal, that is, $2^3=8$, and the interference corresponding to IMRs for different selection modes is also the same. The 8 IMRs include: IMR corresponding to interference from outside of CSI-RS#1, CSI-RS#2, and CSI-RS#3; IMR corresponding to interference from outside of CSI-RS#1; IMR corresponding to interference from outside of CSI-RS#2; IMR corresponding to interference from outside of CSI-RS#3; IMR corresponding to interference from outside of CSI-RS#1 and CSI-RS#2; IMR corresponding to interference from outside of CSI-RS#1 and CSI-RS#3; IMR corresponding to interference from outside of CSI-RS#2 and CSI-RS#3; IMR corresponding to interference including interference from CSI-RS#1, CSI-RS#2, and CSI-RS#3, as well as interference from outside of CSI-RS#1, CSI-RS#2, and CSI-RS#3.

If different selection modes correspond to different IMRs using different identifiers, then 7 selection modes correspond to $7 \times 8 = 56$ IMRs. When the indication information indicates the IMRs corresponding to the measurement results through the first identifiers, the size of the indication information can be 6 bits, used to indicate 1 to 56. However, if different selection modes correspond to the same IMRs, the indication information can directly indicate the IMRs corresponding to the measurement results through the second identifiers, and the size of the indication information can be 3 bits, used to indicate 1 to 8. The network device can determine the IMRs corresponding to the received measurement results according to the first indication information and the second identifiers.

For example, when multiple CSI-RS resources consist of 4 CSI-RS, then for the 15 selection modes, the number of IMRs corresponding to each selection mode is equal, that is $2^4 = 16$, and the interference corresponding to IMRs for different selection modes is also the same. The 16 IMRs include: IMR corresponding to interference from outside of CSI-RS#1, CSI-RS#2, CSI-RS#3, and CSI-RS#4; IMR corresponding to interference from outside of CSI-RS#1; IMR corresponding to interference from outside of CSI-RS#2; IMR corresponding to interference from outside of CSI-RS#3; IMR corresponding to interference from outside of CSI-RS#4; IMR corresponding to interference from outside of CSI-RS#1 and CSI-RS#2; IMR corresponding to interference from outside of CSI-RS#1 and CSI-RS#3; IMR corresponding to interference from outside of CSI-RS#1 and CSI-RS#4; IMR corresponding to interference from outside of CSI-RS#2 and CSI-RS#3; IMR corresponding to interference from outside of CSI-RS#2 and CSI-RS#4; IMR corresponding to interference from outside of CSI-RS#3 and CSI-RS#4; IMR corresponding to interference from outside of CSI-RS#1, CSI-RS#2, and CSI-RS#3; IMR corresponding to interference from outside of CSI-RS#1, CSI-RS#2, and CSI-RS#4; IMR corresponding to interference from outside of CSI-RS#1, CSI-RS#3, and CSI-RS#4; IMR corresponding to interference from outside of CSI-RS#2, CSI-RS#3, and CSI-RS#4; and IMR corresponding to interference including interference from CSI-RS#1, CSI-RS#2, CSI-RS#3, and CSI-RS#4, as well as interference from outside of CSI-RS#1, CSI-RS#2, CSI-RS#3, and CSI-RS#4.

If different selection modes correspond to different IMRs using different identifiers, then 15 selection modes correspond to $15 \times 16 = 240$ IMRs. When the indication information indicates the IMRs corresponding to the measurement results through the first identifiers, the size of the indication information can be 8 bits, used to indicate 1 to 240. However, if different selection modes correspond to the same IMRs, the indication information can directly indicate the IMRs corresponding to the measurement results through the second identifiers, and the size of the indication information can be 4 bits, used to indicate 1 to 15. The network device can determine the IMRs corresponding to the received measurement results according to the first indication information and the second identifiers.

In an embodiment, the first part of CSI further includes at least one of: channel state information reference signal indication; broadband channel quality information; indication of a number of non-zero broadband amplitude coefficients; indication of a number of non-zero coefficients; indication of positions of non-zero coefficients; mode indication; or rank indication.

In an embodiment, the mode indication may be used to indicate CSI feedback mode, codebook mode, etc.

The CSI feedback mode can include Mode 1 and Mode 2, where Mode 1 is feedback based on a single TRP and Mode 2 is feedback based on multiple TRPs. Of course, the CSI feedback mode can also include other modes, which is not limited in this disclosure.

The codebook mode can include codebook structure 1 and codebook structure 2. Codebook structure 1 provides feedback on one piece of frequency domain basis (FD basis) information for all multiple CSI-RS; Codebook structure 2 provides feedback on one piece of frequency domain basis vector information for each of multiple CSI-RS. The codebook mode can also include other modes, which is not limited in this disclosure.

In an embodiment, the second part of CSI further includes at least one of: spatial domain basis vector parameter information; frequency domain basis vector parameter information; indication of positions of non-zero coefficients; phase coefficient information; or amplitude coefficient information.

Fig. 5 is a schematic diagram of interaction between a terminal and a network device illustrated according to an embodiment of the present disclosure.

As shown in Fig. 5, the terminal can receive the first configuration information sent by the network device, and can determine at least one IMR according to the first configuration information. The at least one IMR corresponds to the first CSI-RS resource set, and the first CSI-RS resource set includes at least one CSI-RS resource selected by the terminal from a plurality of CSI-RS resources. Then, the terminal can obtain at least one measurement result by performing measurement based on the at least one CSI-RS resource and/or the at least one IMR. Further, the terminal can send indication information to the network device, wherein the indication information indicates the at least one CSI-RS resource and/or the at least one IMR corresponding to the at least one measurement result.

Correspondingly, the network device can send the first configuration information to the terminal, wherein the first configuration information is used to configure at least one IMR. The at least one IMR corresponds to the first CSI-RS resource set, and the first CSI-RS resource set includes at least one CSI-RS resource selected by the terminal from a plurality of CSI-RS resources. Further, the network device can receive indication information sent by the terminal, wherein the indication information indicates at least one CSI-RS resource and/or at least one IMR corresponding to at least one measurement result obtained by performing measurement by the terminal based on the at least one CSI-RS resource and/or the at least one IMR. That is, the network device can determine at least one CSI-RS resource and/or at least one IMR corresponding to the measurement results according to the indication information.

In an embodiment, the identifier corresponding to the IMR is a first identifier. The first identifier is configured to distinguish IMRs contained in a first set, and the IMRs in the first set include IMRs corresponding to a plurality of selection modes of the terminal for selecting CSI-RS resources in the plurality of CSI-RS resources.

When the terminal selects at least one CSI-RS resource in a plurality of CSI-RS resources, there may be multiple selection modes. Taking the plurality of CSI-RS resources being 2 CSI-RS resources as an example, these 2 CSI-RS resources being CSI-RS#1 and CSI-RS#2, when the terminal selects at least one CSI-RS resource from these 2 CSI-RS resources, there may be 3 selection modes:

Selection mode 1: the terminal selects CSI-RS#1 and CSI-RS#2;
Selection mode 2: the terminal selects CSI-RS#1;
Selection mode 3: the terminal selects CSI-RS#2.

One selection mode may correspond to one or more IMRs. For example, selection mode 1 corresponds to 1 IMR, and the 1 IMR corresponding to selection mode 1 is used to measure interference from outside of CSI-RS#1 and CSI-RS#2; selection mode 2 corresponds to 2 IMRs, one IMR is used to measure interference from outside of CSI-RS#1 and CSI-RS#2, and the other IMR is used to measure interference from outside of CSI-RS#1; selection mode 3 corresponds to 2 IMRs, one IMR is used to measure interference from outside of CSI-RS#1 and CSI-RS#2, and the other IMR is used to measure interference from outside of CSI-RS#2.

The IMRs in the first set include IMRs corresponding to multiple selection modes of the terminal for selecting CSI-RS resources in the plurality of CSI-RS resources. For example, the IMRs in the first set include IMRs corresponding to three selection modes of the terminal for selecting CSI-RS resources in the above 2 CSI-RS resources, that is, 5 IMRs.

The network device or the protocol agreement can determine the first identifier for each IMR in the IMRs corresponding to the multiple selection modes. For example, the above three selection modes correspond to 5 IMRs, and then the first identifier can be determined for each IMR in the 5 IMRs, and the identifiers of the IMRs may be 1 to 5.

For example, the identifier of the one IMR#1 corresponding to selection mode 1 is 1; the identifier of IMR#2 for measuring interference from outside of CSI-RS#1 and CSI-RS#2 corresponding to selection mode 2 is 2; the identifier of IMR#3 for measuring interference from outside of CSI-RS#1 corresponding to selection mode 2 is 3; the identifier of IMR#4 for measuring interference from outside of CSI-RS#1 and CSI-RS#2 corresponding to selection mode 3 is 4; and the identifier of IMR#5 for measuring interference from outside of CSI-RS#2 corresponding to selection mode 3 is 5.

In an embodiment, the identifier corresponding to the IMR includes a second identifier, which is used to distinguish the IMRs contained in the second set. The IMRs contained in the second set include the IMRs corresponding to one selection mode of the terminal for selecting CSI-RS resources in the multiple CSI-RS resources.

When the terminal selects at least one CSI-RS resource from the plurality of CSI-RS resources, there may be multiple selection modes. Taking the plurality of CSI-RS resources being 2 CSI-RS resources as an example, the 2 CSI-RS resources being CSI-RS#1 and CSI-RS#2, when the terminal selects at least one CSI-RS resource in the 2 CSI-RS resources, there may be 3 selection modes:

Selection mode 1: the terminal selects CSI-RS#1 and CSI-RS#2;
Selection mode 2: the terminal selects CSI-RS#1;
Selection mode 3: the terminal selects CSI-RS#2.

One selection mode can correspond to one or more IMRs. For example, selection mode 1 corresponds to 1 IMR, and the 1 IMR corresponding to selection mode 1 is used to measure interference from outside of CSI-RS#1 and CSI-RS#2; selection mode 2 corresponds to 2 IMRs, one IMR is used to measure interference from outside of CSI-RS#1 and CSI-RS#2, and the other IMR is used to measure interference from outside of CSI-RS#1; selection mode 3 corresponds to 2 IMRs, one IMR is used to measure interference from outside of CSI-RS#1 and CSI-RS#2, and the other IMR is used to measure interference from outside of CSI-RS#2.

The IMRs in the second set include the IMRs corresponding to one selection mode of the terminal for selecting CSI-RS resources in the plurality of CSI-RS resources. The number of second sets is equal to the number of selection modes.

For example, when N=2, there are three selection modes, so there can be three second sets: second set#1, second set#2, and second set#3. The IMRs in the second set#1 include the corresponding IMRs when the terminal selects CSI-RS#1 and CSI-RS#2 from 2 CSI-RS resources, that is, 1 IMR; the IMRs in the second set#2 include the corresponding IMRs when the terminal selects CSI-RS#1 from 2 CSI-RS resources, that is, 2 IMRs; The IMRs in the second set#3 include the corresponding IMRs when the terminal selects CSI-RS#2 from 2 CSI-RS resources, that is, 3 IMRs.

The network device or protocol agreement can determine a second identifier for each IMR in the IMRs corresponding to one selection mode. When the selection mode corresponds to only one IMR, the IMR corresponding to this selection mode is fixed, and the IMR can be determined based on the selection mode. Therefore, it is not necessary to determine a second identifier for the IMR corresponding to this selection mode. Of course, a second identifier can also be determined for the IMR corresponding to this selection mode, but since this selection mode only corresponds to one IMR, then it only corresponds to the second identifier of one IMR.

For example, if one IMR#1 corresponds to selection mode 1, then the IMR corresponding to this selection model is fixed and there is no need to set a second identifier for the IMR. The second identifier for IMR#2 used to measure interference from outside of CSI-RS#1 and CSI-RS#2 corresponding to selection mode 2 is 1; the second identifier for IMR#3 used to measure interference from outside of CSI-RS#1 corresponding to selection mode 2 is 2. The second identifier for IMR#4 used to measure interference from outside of CSI-RS#1 and CSI-RS#2 corresponding to selection mode 3 is 1; the second identifier for IMR#5 used to measure interference from outside of CSI-RS#2 corresponding to selection mode 3 is 2.

In an embodiment, the indication information includes first indication information and/or second indication information, wherein the first indication information indicates the at least one CSI-RS resource selected by the terminal in the plurality of CSI-RS resources, and the second indication information indicates the second identifier of the IMR corresponding to the measurement result.

Since the second identifier is the identifier of the IMR in the IMRs corresponding to a selection mode of the terminal for selecting CSI-RS resources in the plurality of CSI-RS resources, the second identifier of the IMR may be different in the IMRs corresponding to the same selection mode, but the second identifier of the IMR may be the same in the IMRs corresponding to different selection modes. For example, IMR#3 corresponding to the above selection mode 2 and IMR#4 corresponding to the selection mode 3 have the same second identifier, both of which are 1.

Therefore, in order to ensure that the network device accurately distinguish the IMR based on the second identifier, the indication information sent by the terminal to the network device may include the first indication information and the second indication information. The first indication information is used to indicate the at least one CSI-RS resource selected by the terminal from multiple CSI-RS resources, that is, to indicate the selection mode of the terminal for selecting CSI-RS resources. The second indication information is used to indicate the second identifier of the IMR corresponding to the measurement result sent to the network device.

The network device can determine the selection mode of the terminal for selecting CSI-RS resources based on the first indication information, and can determine the second identifier of the IMR corresponding to the received measurement result based on the second indication information, thereby accurately determining the IMR corresponding to the measurement result.

It should be noted that for other contents related to this embodiment, please refer to the descriptions of relevant contents in the previous embodiments, which will not be repeated here.

Corresponding to the embodiments of the information sending method and the information receiving method described above, this disclosure also provides embodiments of an information sending apparatus and an information receiving apparatus.

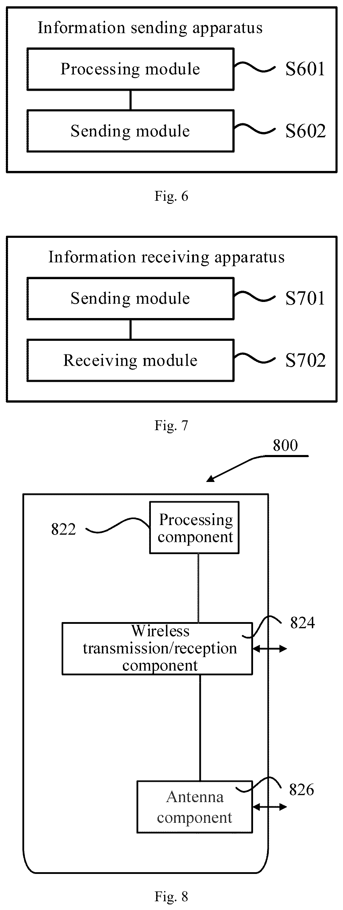

Fig. 6 is a block diagram of an information sending apparatus illustrated according to an embodiment of the present disclosure. As shown in Fig. 6, the information sending apparatus includes a processing module 601 and a sending module 602.

The processing module 601 is configured to determine at least one interference measurement resource (IMR) according to first configuration information sent by a network device, wherein the at least one IMR corresponds to a first channel state information reference signal (CSI-RS) resource set, and the first CSI-RS resource set includes at least one CSI-RS resource selected by the terminal from a plurality of CSI-RS resources; and obtain at least one measurement result by performing measurement based on the at least one CSI-RS resource and/or the at least one IMR.

The sending module 602 is configured to send indication information to the network device, wherein the indication information indicates the at least one CSI-RS resource and/or the at least one IMR corresponding to the at least one measurement result.

In an embodiment, an identifier corresponding to the IMR includes a first identifier, the first identifier is configured to distinguish IMRs contained in a first set, and the IMRs in the first set include IMRs corresponding to a plurality of selection modes of the terminal for selecting CSI-RS resources in the plurality of CSI-RS resources.

In an embodiment, the indication information indicates the first identifier of the IMR corresponding to the measurement result.

In an embodiment, the indication information is carried in a first part of CSI or a second part of CSI; wherein a size of the first part of the CSI is fixed.

In an embodiment, an identifier corresponding to the IMR includes a second identifier, the second identifier is configured to distinguish IMRs contained in a second set, and the IMRs in the second set comprise IMRs corresponding to one selection mode of the terminal for selecting CSI-RS resources in the plurality of CSI-RS resources.

In an embodiment, the indication information includes first indication information and/or second indication information; wherein the first indication information indicates the at least one CSI-RS resource selected by the terminal in the plurality of CSI-RS resources, and the second indication information indicates the second identifier of the IMR corresponding to the measurement result.

In an embodiment, the first indication information is carried in a first part of CSI, and the second indication information is carried in the first part or a second part of CSI; wherein a size of the first part of the CSI is fixed, and a size of the second part of the CSI is fixed or variable.

In an embodiment, the first part of the CSI further includes at least one of: channel state information reference signal indication; broadband channel quality information; indication of a number of non-zero broadband amplitude coefficients; indication of a number of non-zero coefficients; indication of positions of non-zero coefficients; mode indication; or rank indication.

In an embodiment, the second part of the CSI further includes at least one of: spatial domain basis vector parameter information; frequency domain basis vector parameter information; indication of positions of non-zero coefficients; phase coefficient information; or amplitude coefficient information.

In an embodiment, interference when the terminal selects the at least one CSI-RS resource in the plurality of CSI-RS resources includes at least one of: interference from outside of the plurality of CSI-RS resources; or interference from at least one CSI-RS resource not selected by the terminal in the plurality of CSI-RS resources.

In an embodiment, interference when the terminal selects the at least one CSI-RS resource in the plurality of CSI-RS resources includes interference from the at least one CSI-RS resource selected by the terminal in the plurality of CSI-RS resources.

In an embodiment, the processing module is further configured to determine channel measurement resources (CMRs) according to second configuration information sent by the network device, wherein the CMRs include the plurality of CSI-RS resources.

Fig. 7 is a block diagram of an information receiving apparatus illustrated according to an embodiment of the present disclosure. As shown in Fig. 7, the information receiving apparatus includes a sending module 701 and a receiving module 702.

The sending module 701 is configured to send first configuration information to a terminal, wherein the first configuration information is used to configure at least one interference measurement resource (IMR) for the terminal, the at least one IMR corresponds to a first channel state information reference signal (CSI-RS) resource set, and the first CSI-RS resource set includes at least one CSI-RS resource selected by the terminal from a plurality of CSI-RS resources.

The receiving module 702 is configured to receive indication information sent by the terminal, wherein the indication information indicates at least one CSI-RS resource and/or at least one IMR corresponding to at least one measurement result obtained by the terminal performing measurement based on the at least one CSI-RS resource and/or the at least one IMR.

In an embodiment, an identifier corresponding to the IMR includes a first identifier, the first identifier is configured to distinguish IMRs contained in a first set, and the IMRs in the first set include IMRs corresponding to a plurality of selection modes of the terminal for selecting CSI-RS resources in the plurality of CSI-RS resources.

In an embodiment, the indication information indicates the first identifier of the IMR corresponding to the measurement result.

In an embodiment, the indication information is carried in a first part of CSI or a second part of CSI; wherein a size of the first part of the CSI is fixed.

In an embodiment, an identifier corresponding to the IMR includes a second identifier, the second identifier is configured to distinguish IMRs contained in a second set, and the IMRs in the second set comprise IMRs corresponding to one selection mode of the terminal for selecting CSI-RS resources in the plurality of CSI-RS resources.

In an embodiment, the indication information includes first indication information and/or second indication information; wherein the first indication information indicates the at least one CSI-RS resource selected by the terminal in the plurality of CSI-RS resources, and the second indication information indicates the second identifier of the IMR corresponding to the measurement result.

In an embodiment, the first indication information is carried in a first part of CSI, and the second indication information is carried in the first part or a second part of CSI; wherein a size of the first part of the CSI is fixed, and a size of the second part of the CSI is fixed or variable.

In an embodiment, the first part of the CSI further includes at least one of: channel state information reference signal indication; broadband channel quality information; indication of a number of non-zero broadband amplitude coefficients; indication of a number of non-zero coefficients; indication of positions of non-zero coefficients; mode indication; or rank indication.

In an embodiment, the second part of the CSI further includes at least one of: spatial domain basis vector parameter information; frequency domain basis vector parameter information; indication of positions of non-zero coefficients; phase coefficient information; or amplitude coefficient information.

In an embodiment, interference when the terminal selects the at least one CSI-RS resource in the plurality of CSI-RS resources includes at least one of: interference from outside of the plurality of CSI-RS resources; or interference from at least one CSI-RS resource not selected by the terminal in the plurality of CSI-RS resources.

In an embodiment, interference when the terminal selects the at least one CSI-RS resource in the plurality of CSI-RS resources includes interference from the at least one CSI-RS resource selected by the terminal in the plurality of CSI-RS resources.

In an embodiment, the sending module is further configured to send second configuration information to the terminal, wherein the second configuration information is used to configure CMRs, and the CMRs include the plurality of CSI-RS resources.

For the apparatus embodiments, as they basically corresponds to the method embodiments, please refer to the partial description of the method embodiments for relevant information. The above described embodiments of the apparatus are only illustrative, where the modules described as separate components may or may not be physically separated, and the components displayed as modules may or may not be physical modules, i.e. they may be located in one place or distributed across multiple network modules. Some or all of the modules can be selected according to actual needs to achieve the purpose of the technical solution of embodiments. Ordinary technical personnel in this field can understand and implement without creative labor.

Embodiments of the present disclosure further provide a communication device, including: a processor; and a memory for storing a computer program, wherein, when the computer program is executed by the processor, the information sending method described in any embodiment above is implemented.

Embodiments of the present disclosure further provide a communication device, including: a processor; and a memory for storing a computer program, wherein, when the computer program is executed by the processor, the information receiving method described in any embodiment above is implemented.

Embodiments of the present disclosure further provide a computer readable storage medium, configured to store a computer program which, when executed by a processor, the information sending method described in any embodiment above is implemented.

Embodiments of the present disclosure further provide a computer readable storage medium, configured to store a computer program which, when executed by a processor, the information receiving method described in any embodiment above is implemented.

Please refer to Fig. 8, which is a block diagram of a device 800 for information receiving illustrated according to an embodiment of the present disclosure. The device 800 may be base station. Referring to Fig. 8, the device 800 includes a processing component 822, a wireless transmission/reception component 824, an antenna component 826, and a wireless interface specific signal processing portion. The processing component 822 may further include one or more processors. One of the processors in the processing component 822 can be configured to implement the information receiving method described in any of the above embodiments.

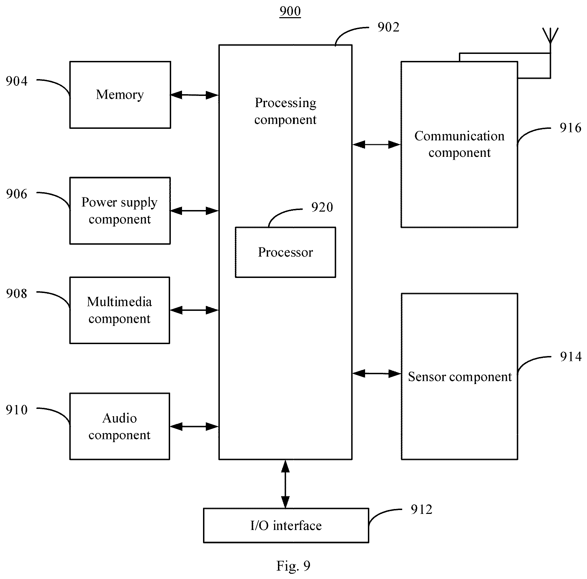

Fig. 9 is a block diagram of a device 900 for information sending illustrated according to an embodiment of the present disclosure. For example, the device 900 may be terminal, for example, a mobile phone, a computer, a digital broadcast terminal device, a message transceiver device, a game console, a tablet device, a medical device, a fitness device, a personal digital assistant, or the like.

Referring to FIG. 9, the device 900 may include one or more of the following components: a processing component 902, a memory 904, a power supply component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to complete all or part of the steps in the above methods. Moreover, the processing component 902 may include at least one module which facilitates the interaction between the processing component 902 and other components. For instance, the processing component 902 may include a multimedia module to facilitate the interaction between the multimedia component 908 and the processing component 902.

The memory 904 is configured to store various types of data to support operations in the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 906 provides power to various components of the device 900. The power supply component 906 may include a power management system, one or more power sources, and any other components associated with the generation, management, and distribution of power in the device 900.

The multimedia component 908 includes a screen providing an output interface between the device 900 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slips, and gestures on the touch panel. The touch sensors may not only sense a boundary of a touch or slip action, but also sense a wake-up time and a pressure associated with the touch or slip action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) that is configured to receive external audio signals when the device 900 is in operating modes such as Call Mode, Record Mode, and Speech Recognition Mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900.

The communication component 916 is configured to facilitate wired or wireless communication between the device 900 and other devices. The device 900 may access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In an exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the information sending method executed by the terminal described in any of embodiments above.

In an exemplary embodiment, a non-transitory computer-readable storage medium including instructions is also provided, such as a memory 904 including instructions, which can be executed by the processor 920 of the device 900 to accomplish the above methods. For example, the non-transitory computer-readable storage medium may be ROM, random access memory (RAM), CD-ROM, magnetic tape, floppy disk, and optical data storage devices.

After considering the specification and practicing the invention disclosed herein, technical personnel in this field will easily come up with other implementations of the present disclosure. This application aims to cover any variations, uses, or adaptive changes of the present disclosure, which follow the general principles of the present disclosure and include common knowledge or customary technical means in the technical field not disclosed in the present disclosure.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

**1.** An information sending method, performed by a terminal, comprising:

determining at least one interference measurement resource, IMR, according to first configuration information sent by a network device, wherein the at least one IMR corresponds to a first channel state information reference signal, CSI-RS, resource set, and the first CSI-RS resource set comprises at least one CSI-RS resource selected by the terminal from a plurality of CSI-RS resources (S101);

obtaining at least one measurement result by performing measurement based on the at least one CSI-RS resource and/or the at least one IMR (S102); and

sending indication information to the network device, wherein the indication information indicates the at least one CSI-RS resource and/or the at least one IMR corresponding to the at least one measurement result (S103).

2. The method of claim 1, wherein the indication information is carried in a first part of CSI or a second part of CSI; wherein a size of the first part of the CSI is fixed.

3. The method of claim 1, wherein a number of the plurality of CSI-RS resources is 2, 3 or 4; wherein a number of the plurality of CSI-RS resources is equal to a number of TRPs used by the network device to provide services to the terminal, and the number of TRPs is greater than 2.

4. The method of any one of the preceding claims, further comprising:

determining a selection mode for selecting the at least one CSI-RS resource from the plurality of CSI-RS resources; and

determining a number of the at least one CSI-RS resource selected from the plurality of CSI-RS resources based on the selection mode.

5. The method of any one of the preceding claims, wherein an identifier corresponding to the IMR comprises a second identifier, the second identifier is configured to distinguish IMRs contained in a second set, and the IMRs in the second set comprise IMRs corresponding to one selection mode of the terminal for selecting CSI-RS resources in the plurality of CSI-RS resources.

6. The method of claim 5, wherein the indication information comprises first indication information and/or second indication information;

wherein the first indication information indicates the at least one CSI-RS resource selected by the terminal in the plurality of CSI-RS resources, and the second indication information indicates the second identifier of the IMR corresponding to the measurement result;

especially, wherein the first indication information is carried in a first part of CSI, and the second indication information is carried in the first part or a second part of CSI;

wherein a size of the first part of the CSI is fixed, and a size of the second part of the CSI is fixed or variable.

7. The method of any of claims 1-6, wherein interference when the terminal selects the at least one CSI-RS resource in the plurality of CSI-RS resources comprises at least one of:

interference from outside of the plurality of CSI-RS resources; or

interference from at least one CSI-RS resource not selected by the terminal in the plurality of CSI-RS resources; or,

wherein interference when the terminal selects the at least one CSI-RS resource in the plurality of CSI-RS resources comprises:

interference from the at least one CSI-RS resource selected by the terminal in the plurality of CSI-RS resources.

8. The method of any of claims 1-7, further comprising:
determining channel measurement resources, CMRs, according to second configuration information sent by the network device, wherein the CMRs comprise the plurality of CSI-RS resources (S201).

9. An information receiving method, performed by a network device, comprising:

sending first configuration information to a terminal, wherein the first configuration information is used to configure at least one interference measurement resource, IMR, for the terminal, the at least one IMR corresponds to a first channel state information reference signal, CSI-RS, resource set, and the first CSI-RS resource set comprises at least one CSI-RS resource selected by the terminal from a plurality of CSI-RS resources (S301);

receiving indication information sent by the terminal, wherein the indication information indicates at least one CSI-RS resource and/or at least one IMR corresponding to at least one measurement result obtained by the terminal performing measurement based on the at least one CSI-RS resource and/or the at least one IMR (S302).

10. The method of claim 9, wherein the indication information is carried in a first part of CSI or a second part of CSI; wherein a size of the first part of the CSI is fixed.

11. The method of claim 9 or 10, wherein a number of the plurality of CSI-RS resources is 2, 3 or 4; wherein a number of the plurality of CSI-RS resources is equal to a number of TRPs used by the network device to provide services to the terminal, and the number of TRPs is greater than 2.

12. The method of any one of claims 9 to 11, further comprising:

   determining a selection mode for selecting the at least sone CSI-RS resource from the plurality of CSI-RS resources; and
   determining a number of the at least one CSI-RS resource selected from the plurality of CSI-RS resources based on the selection mode.

13. The method of any one of claims 9 to 12, wherein an identifier corresponding to the IMR comprises a second identifier, the second identifier is configured to distinguish IMRs contained in a second set, and the IMRs in the second set comprise IMRs corresponding to one selection mode of the terminal for selecting CSI-RS resources in the plurality of CSI-RS resources;

   especially, wherein the indication information comprises first indication information and/or second indication information;
   wherein the first indication information indicates the at least one CSI-RS resource selected by the terminal in the plurality of CSI-RS resources, and the second indication information indicates the second identifier of the IMR corresponding to the measurement result;
   especially, wherein the first indication information is carried in a first part of CSI, and the second indication information is carried in the first part or a second part of CSI;
   wherein a size of the first part of the CSI is fixed, and a size of the second part of the CSI is fixed or variable.

14. An information sending apparatus, comprising:

   a processing module (S601), configured to determine at least one interference measurement resource, IMR, according to first configuration information sent by a network device, wherein the at least one IMR corresponds to a first channel state information reference signal, CSI-RS, resource set, and the first CSI-RS resource set comprises at least one CSI-RS resource selected by the terminal from a plurality of CSI-RS resources; and obtain at least one measurement result by performing measurement based on the at least one CSI-RS resource and/or the at least one IMR; and
   a sending module (S602), configured to send indication information to the network device, wherein the indication information indicates the at least one CSI-RS resource and/or the at least one IMR corresponding to the at least one measurement result.

15. An information receiving apparatus, comprising:

   a sending module (S701), configured to send first configuration information to a terminal, wherein the first configuration information is used to configure at least one interference measurement resource, IMR, for the terminal, the at least one IMR corresponds to a first channel state information reference signal, CSI-RS, resource set, and the first CSI-RS resource set comprises at least one CSI-RS resource selected by the terminal from a plurality of CSI-RS resources; and
   a receiving module (S702), configured to receive indication information sent by the terminal, wherein the indication information indicates at least one CSI-RS resource and/or at least one IMR corresponding to at least one measurement result obtained by the terminal performing measurement based on the at least one CSI-RS resource and/or the at least one IMR.

determining at least one IMR according to first configuration information sent by a network device, wherein the at least one IMR corresponds to a first CSI-RS resource set, and the first CSI-RS resource set includes at least one CSI-RS resource selected by the terminal from a plurality of CSI-RS resources — S101

obtaining at least one measurement result by performing measurement based on the at least one CSI-RS resource and/or the at least one IMR — S102

sending indication information to the network device, wherein the indication information indicates the at least one CSI-RS resource and/or the at least one IMR corresponding to the at least one measurement result — S102

Fig. 1

determining channel measurement resources (CMRs) according to second configuration information sent by the network device, wherein the CMRs include a plurality of CSI-RS resources — S201

determining at least one IMR according to first configuration information sent by a network device, wherein the at least one IMR corresponds to a first CSI-RS resource set, and the first CSI-RS resource set includes at least one CSI-RS resource selected by the terminal from the plurality of CSI-RS resources — S101

obtaining at least one measurement result by performing measurement based on the at least one CSI-RS resource and/or the at least one IMR — S102

sending indication information to the network device, wherein the indication information indicates the at least one CSI-RS resource and/or the at least one IMR corresponding to the at least one measurement result — S102

Fig. 2

sending first configuration information to a terminal, wherein the first configuration information is used to configure at least one interference measurement resource (IMR) for the terminal, the at least one IMR corresponds to a first channel state information reference signal (CSI-RS) resource set, and the first CSI-RS resource set includes at least one CSI-RS resource selected by the terminal from a plurality of CSI-RS resources — S301

receiving indication information sent by the terminal, wherein the indication information indicates at least one CSI-RS resource and/or at least one IMR corresponding to at least one measurement result obtained by the terminal performing measurement based on the at least one CSI-RS resource and/or the at least one IMR — S302

Fig. 3

sending second configuration information to the terminal, wherein the second configuration information is used to configure channel measurement resources (CMRs), the CMRs including the plurality of CSI-RS resources ~ S401

sending first configuration information to a terminal, wherein the first configuration information is used to configure at least one interference measurement resource (IMR) for the terminal, the at least one IMR corresponds to a first channel state information reference signal (CSI-RS) resource set, and the first CSI-RS resource set includes at least one CSI-RS resource selected by the terminal from a plurality of CSI-RS resources ~ S301

receiving indication information sent by the terminal, wherein the indication information indicates at least one CSI-RS resource and/or at least one IMR corresponding to at least one measurement result obtained by the terminal performing measurement based on the at least one CSI-RS resource and/or the at least one IMR ~ S302

Fig. 4

Terminal | Network device

First configuration information

Determine at least one IMR

Perform measurement based on at least one CSI-RS resource and/or at least one IMR

Measurement results and indication information

Determine at least one CSI-RS resource and/or at least one IMR corresponding to the measurement results according to the indication information

Fig. 5

Information sending apparatus

Processing module — S601

Sending module — S602

Fig. 6

Information receiving apparatus

Sending module — S701

Receiving module — S702

Fig. 7

800

822 — Processing component

824 — Wireless transmission/reception component

826 — Antenna component

Fig. 8

Fig. 9

## INTERNATIONAL SEARCH REPORT

| International application No. |
|---|
| **PCT/CN2023/072212** |

| **A.** | **CLASSIFICATION OF SUBJECT MATTER** |
|---|---|

H04W 24/02(2009.01)i

According to International Patent Classification (IPC) or to both national classification and IPC

| **B.** | **FIELDS SEARCHED** |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS, CNTXT, VEN, DWPI, WPABS, USTXT, WOTXT, EPTXT, IEEE, 3GPP, CNKI: 干扰, 测量, 检测, 监测, 信道状态, 资源, 参考信号, 筛选, 选择, IMR, CSI, RS, CMS, TRP, select

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 108418667 A (HUAWEI TECHNOLOGIES CO., LTD.) 17 August 2018 (2018-08-17) description, paragraphs [0005]-[0072] | | 1-31 |
| A | CN 112615655 A (GUANGDONG OPPO MOBILE TELECOMMUNICATIONS CORP., LTD.) 06 April 2021 (2021-04-06) entire document | | 1-31 |
| A | CN 114828074 A (VIVO MOBILE COMMUNICATION CO., LTD.) 29 July 2022 (2022-07-29) entire document | | 1-31 |
| A | WO 2022236566 A1 (APPLE INC.) 17 November 2022 (2022-11-17) entire document | | 1-31 |
| A | QUALCOMM INC. "On interference measurement resource" *3GPP TSG RAN WG1 #88bis, R1-1705585*, 25 March 2017 (2017-03-25), entire document | | 1-31 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 September 2023** | **27 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | | International application No. |
|---|---|---|
| Information on patent family members | | **PCT/CN2023/072212** |

| Patent document cited in search report | | | Publication date (day/month/year) | Patent family member(s) | | | Publication date (day/month/year) |
|---|---|---|---|---|---|---|---|
| CN | 108418667 | A | 17 August 2018 | CA | 3053206 | A1 | 23 May 2019 |
| | | | | US | 2020007299 | A1 | 02 January 2020 |
| | | | | US | 11153055 | B2 | 19 October 2021 |
| | | | | JP | 2020511831 | A | 16 April 2020 |
| | | | | JP | 6938659 | B2 | 22 September 2021 |
| | | | | WO | 2019095692 | A1 | 23 May 2019 |
| | | | | BR | 112019018033 | A2 | 16 June 2020 |
| | | | | EP | 3567900 | A1 | 13 November 2019 |
| | | | | EP | 3567900 | A4 | 08 January 2020 |
| | | | | EP | 3567900 | B1 | 04 May 2022 |
| CN | 112615655 | A | 06 April 2021 | WO | 2018157296 | A1 | 07 September 2018 |
| CN | 114828074 | A | 29 July 2022 | | None | | |
| WO | 2022236566 | A1 | 17 November 2022 | US | 2023216566 | A1 | 06 July 2023 |

Form PCT/ISA/210 (patent family annex) (July 2022)